# EUROPEAN PATENT APPLICATION

(11) **EP 4 801 048 A1**
(43) Date of publication of application: **02.09.2026**
(21) Application number: 24882903.8
(22) Date of filing: 25.10.2024
(51) Int. Cl.: H04N 23/52, H04N 23/55, H04N 23/53, G03B 5/00, G03B 17/12, G03B 17/55

(54) **LENS DRIVING DEVICE, AND CAMERA DEVICE AND OPTICAL INSTRUMENT COMPRISING SAME**

(30) Priority: 26.10.2023 KR 20230144564
(71) Applicant: LG Innotek Co., Ltd., Seoul 07796 (KR)
(72) Inventor: PARK, Tae Bong, Seoul 07796 (KR); SEOL, Dong Hyeon, Seoul 07796 (KR)
(74) Representative: DREISS Patentanwälte PartG mbB
(86) International application number: PCT/KR2024/016424
(87) International publication number: WO 2025/089877

(57) **Abstract**

An embodiment comprises: a fixing part including a cover member, a base coupled to the cover member, and a coil disposed on the base; a moving part including a magnet facing the coil, and movable by interaction between the magnet and the coil; a first heat dissipation member disposed on the base; and a second heat dissipation member connected to the first heat dissipation member and exposed from the cover member.

## Description

### [Technical Field]

Embodiments relate to a lens moving apparatus and a camera module and optical instrument including the same.

### [Background Art]

Voice coil motor (VCM) technology, which is used in conventional general camera modules, is difficult to apply to a micro-scale camera module, which is intended to exhibit low power consumption, and study related thereto has been actively conducted.

There is increasing demand for, and production of, electronic products such as smartphones and cellular phones equipped with cameras. Cameras for cellular phones have been increasing in resolution and decreasing in size, and accordingly, actuators therefor are also becoming smaller, larger in diameter, and more multifunctional. In order to realize a high-resolution cellular phone camera, improvement in the performance of the cellular phone camera and additional functions, such as autofocus, shutter shaking prevention, and zooming in and out, are required.

### [Disclosure]

### [Technical Problem]

Embodiments provide a lens moving apparatus, a camera device, and an optical instrument, capable of improving dissipation of heat generated from heat sources such as coils and an image sensor.

### [Technical Solution]

A lens moving apparatus according to an embodiment includes a cover member, a fixed unit including a base coupled to the cover member and a coil disposed on the base, a moving unit including a magnet facing the coil, the moving unit being configured to be movable through interaction between the magnet and the coil, a first heat dissipation member disposed on the base, and a second heat dissipation member connected to the first heat dissipation member and exposed from the cover member.

The fixed unit may include a circuit board disposed on the base, the coil may be disposed on the circuit board, and at least a portion of the circuit board may be connected to the first heat dissipation member. The first heat dissipation member may be exposed from a lower surface of the base. At least a portion of the first heat dissipation member may be integrally formed with the base.

The lens moving apparatus may include a ball member disposed between the base and the moving unit. The cover member may include an opening to expose the second heat dissipation member through the opening.

The cover member may include an upper plate and a side plate, the base may include a side portion and a lower portion positioned below the side portion, the first heat dissipation member may include a side plate disposed on the side portion of the base and a lower plate disposed on the lower portion of the base, and the second heat dissipation member may be disposed on the side plate of the first heat dissipation member. A portion of the lower plate may be exposed from a lower surface of the lower portion of the base. The second heat dissipation member may include metal or graphite.

The fixed unit may include a circuit board disposed on the base, the coil may be disposed on the circuit board, and at least a portion of the circuit board may be connected to the first heat dissipation member.

The fixed unit may include a circuit board disposed on the base, the coil may be disposed on the circuit board, and the circuit board may include an opening formed to allow the second heat dissipation member to pass through the opening or to be disposed in the opening.

A lens moving apparatus according to another embodiment includes a cover member, a fixed unit including a base coupled to the cover member and a coil disposed on the base, a moving unit including a magnet facing the coil, the moving unit being configured to be movable through interaction between the magnet and the coil, a metal member disposed on the base, and a heat dissipation member connected to the metal member and the cover member.

A camera device according to an embodiment includes a first circuit board, an image sensor disposed on the first circuit board, a sensor base disposed on the first circuit board, a first heat dissipation member disposed on the sensor base, a base disposed on the sensor base, a second heat dissipation member disposed on the base and connected to the first heat dissipation member, a cover member disposed on the base, a coil disposed in the cover member and a magnet facing the coil, and a third heat dissipation member connected to at least one of the first heat dissipation member or the second heat dissipation member.

The second heat dissipation member may include an exposed region exposed from a lower surface of the base, the first heat dissipation member may include an exposed region exposed from an upper surface of the sensor base, and the exposed region of the first heat dissipation member and the exposed region of the second heat dissipation member may be connected to each other.

The second heat dissipation member may be integrally formed with the base, and the first heat dissipation member may be integrally formed with the sensor base. The camera device may include a ball member disposed between the base and the moving unit.

The first circuit board may include a heat dissipation portion connected to the second heat dissipation member. The heat dissipation portion may be disposed to surround the image sensor. The heat dissipation portion may be connected to a ground layer of the first circuit board.

The cover member may include an upper plate and a side plate, the base may include a side portion and a lower portion positioned below the side portion, the second heat dissipation member may include a side plate disposed on the side portion of the base and a lower plate disposed on the lower portion of the base, and the third heat dissipation member may be disposed on the side plate of the second heat dissipation member. The side plate of the cover member may include an opening to expose the third heat dissipation member through the opening.

In the camera device, the fixed unit may include a second circuit board disposed on the second heat dissipation member, and the coil may be disposed on the second circuit board.

### [Advantageous Effects]

Embodiments may efficiently dissipate heat generated from a heat source such as coils and/or an image sensor.

Embodiments may prevent or suppress excessive increase in temperature of a lens moving apparatus and/or a camera device.

Embodiments may prevent image loss and/or quantitative and qualitative degradation in image quality of the image sensor caused by heat generated from the coils and the image sensor.

Embodiments may suppress demagnetization of a driving magnet caused by heat generated from the coils and/or the image sensor.

Embodiments may prevent deterioration in accuracy and/or reliability of a position sensor and may improve reliability of an autofocus operation and/or an optical image stabilization operation.

### [Description of Drawings]

FIG. 1 is a perspective view of a camera device according to an embodiment.
FIG. 2 is a perspective view of the camera device with a cover member removed.
FIG. 3A is a first exploded perspective view of the camera device excluding a lens module.
FIG. 3B is a second exploded perspective view of the camera device excluding the lens module.
FIG. 4A is a first exploded perspective view of the lens module, a lens moving apparatus, a filter, a sensor base, an image sensor, and a circuit board.
FIG. 4B is a second exploded perspective view of the lens module, the lens moving apparatus, the filter, the sensor base, the image sensor, and the circuit board.
FIG. 5A is a cross-sectional view taken in direction AB in FIG. 2.
FIG. 5B is a cross-sectional view taken in direction CD in FIG. 2.
FIG. 5C is a cross-sectional view taken in direction EF in FIG. 2.
FIG. 5D is a cross-sectional view taken in direction GH in FIG. 2.
FIG. 6 is a bottom perspective view of the cover member.
FIG. 7 is a perspective view of the lens moving apparatus with the cover member removed.
FIG. 8A is a first perspective view of a first moving unit and a fixed unit.
FIG. 8B is a second perspective view of the first moving unit and the fixed unit.
FIG. 8C is a third perspective view of the first moving unit and the fixed unit.
FIG. 9A is a first exploded perspective view of the first moving unit.
FIG. 9B is a second exploded perspective view of the first moving unit.
FIG. 9C is a third exploded perspective view of the first moving unit.
FIG. 10A is a coupled perspective view of a bobbin, a reinforcing member, a ball member, and a support member.
FIG. 10B is a coupled perspective view of the bobbin, the reinforcing member, the ball member, the support member, and an elastic member.
FIG. 11A is an exploded perspective view of a frame and a base.
FIG. 11B is a first coupled perspective view of the base, the frame, and a heat dissipation member.
FIG. 11C is a second coupled perspective view of the base, the frame, and the heat dissipation member.
FIG. 11D is a third coupled perspective view of the base, the frame, and the heat dissipation member.
FIG. 12 is a coupled perspective view of a circuit board, coils, position sensors, and capacitors.
FIG. 13 is an exploded perspective view of the sensor base and the frame.
FIG. 14A is a first perspective view of a lens moving apparatus according to another embodiment.
FIG. 14B is a second perspective view of the lens moving apparatus shown in FIG. 14A.
FIG. 15 is an exploded perspective view of a camera device according to still another embodiment.
FIG. 16 is an exploded perspective view of a fixed unit and a filter of the camera device shown in FIG. 15.
FIG. 17 is a coupled view of the fixed unit shown in FIG. 15.
FIG. 18 is a bottom perspective view of the fixed unit shown in FIG. 15.
FIG. 19 is a coupled view of the fixed unit and the filter shown in FIG. 15.
FIG. 20A is a cross-sectional view of the camera device shown in FIG. 15 taken in direction AF in FIG. 2.
FIG. 20B is a cross-sectional view of the camera device shown in FIG. 15 taken in direction CD in FIG. 2.
FIG. 20C is a cross-sectional view of the camera device shown in FIG. 15 taken in direction EF in FIG. 2.
FIG. 20D is a cross-sectional view of the camera device shown in FIG. 15 taken in direction GH in FIG. 2.
FIG. 21 is a cross-sectional view of a camera device according to still another embodiment.
FIG. 22 is a cross-sectional view of a camera device according to still another embodiment.
FIG. 23 is a perspective view of an optical instrument according to an embodiment.
FIG. 24 is a configuration diagram of the optical instrument shown in FIG. 23.

### [Best Mode]

Hereinafter, embodiments of the present disclosure will be described in detail with reference to the accompanying drawings.

The technical spirit of the disclosure is not limited to the embodiments to be described, and may be implemented in various other forms, and one or more of the components may be selectively combined and substituted for use without exceeding the scope of the technical spirit of the disclosure.

In addition, terms (including technical and scientific terms) used in the embodiments of the disclosure, unless specifically defined and described explicitly, are to be interpreted as having meanings that may be generally understood by those having ordinary skill in the art to which the disclosure pertains, and meanings of terms that are commonly used, such as terms defined in a dictionary, should be interpreted in consideration of the context of the relevant technology.

Further, the terms used in the embodiments of the disclosure are for explaining the embodiments and are not intended to limit the disclosure. In this specification, the singular forms may also include plural forms unless otherwise specifically stated in a phrase, and in the case in which "at least one (or one or more) of A, B, or C" is stated, it may include one or more of all possible combinations of A, B, and C.

In addition, in describing the components of the embodiments of the disclosure, terms such as "first," "second," "A," "B," "(a)," and "(b)" can be used. Such terms are only for distinguishing one component from another component, and do not determine the nature, sequence, or procedure of the corresponding constituent elements.

In addition, when it is described that a component is "connected," "coupled" or "joined" to another component, the description may include not only being directly "connected," "coupled" or "joined" to the other component but also being "connected," "coupled" or "joined" by another component between the component and the other component. In addition, in the case of being described as being formed or disposed "above (on)" or "below (under)" another component, the description includes not only the case where the two components are in direct contact with each other, but also the case where one or more other components are formed or disposed between the two components. In addition, when expressed as "above (on)" or "below (under)," it may refer to a downward direction as well as an upward direction with respect to one element.

Hereinafter, a lens moving apparatus may alternatively be referred to as a lens moving unit, a voice coil motor (VCM), an actuator, or a lens moving device. Hereinafter, a "coil" may alternatively be referred to as a coil unit, and an "elastic member" may alternatively be referred to as an elastic unit or a spring.

In addition, in the following description, a "terminal" may alternatively be referred to as a pad, an electrode, a conductive layer, or a bonding unit.

For convenience of description, a lens moving apparatus according to an embodiment will be described using the Cartesian coordinate system (x,y,z), but the embodiments are not limited thereto, and may be described using other coordinate systems. In each drawing, the x-axis and the y-axis may be directions perpendicular to the z-axis, which is an optical-axis direction. The z-axis direction, which is the optical-axis (OA) direction, may be defined as any one of a first direction, a second direction, and a third direction, the x-axis direction may be defined as another one of the first direction, the second direction, and the third direction, and the y-axis direction may be defined as the remaining one of the first direction, the second direction, and the third direction.

The optical-axis direction may be defined as an optical-axis direction of a lens and/or an image sensor coupled to the lens moving apparatus. Alternatively, the optical-axis direction may be a direction perpendicular to a sensor surface (an imaging area) of the image sensor.

The lens moving apparatus according to the embodiment may perform an autofocus function. In addition, the lens moving apparatus according to the embodiment may perform an optical image stabilization function.

An "autofocus (AF) function" is defined as a function of automatically focusing on a subject by adjusting a distance between an image sensor and a lens (or a bobbin) by moving the lens (or the bobbin) in the optical-axis direction according to a distance to the subject so that a clear image of the subject is formed on the image sensor. In addition, "closed-loop autofocus (CLAF) control" refers to receiving, as feedback, an output signal of a position sensor that detects displacement or a position of an AF moving unit, for example, a bobbin or a magnet, in the optical-axis direction, and adjusting or controlling, in real time, a driving signal supplied to a driving unit (e.g., a coil) that moves the AF moving unit using the received output signal. This may improve accuracy of focus adjustment. An "optical image stabilization (OIS) function" is defined as a function of moving or tilting a lens in a direction perpendicular to the optical axis so as to offset vibration (movement) generated in the image sensor due to external force.

Hereinafter, one of a "magnet 130" and a "magnet 25" may be referred to as a "first magnet," and the other may be referred to as a "second magnet." Alternatively, one of the "magnet 130," a "first magnet unit 25A," and a "second magnet unit 25B" may be referred to as a "first-axis driving magnet," another may be referred to as a "second-axis driving magnet," and the remaining one may be referred to as a "third-axis driving magnet." Hereinafter, one of a "coil 120" and a "coil 230" may be referred to as a "first coil," and the other may be referred to as a "second coil." Hereinafter, one of a "ball member 510" and a "ball member 52" may be referred to as a "first ball member," and the other may be referred to as a "second ball member." In addition, one of frames 50 and 60 may be referred to as a "first frame," and the other of the frames 50 and 60 may be referred to as a "second frame."

In addition, the frame 50 may be referred to as one of first to third heat dissipation members, the frame 60 may be referred to as another one of the first to third heat dissipation members, and a heat dissipation member 40 or 45 may be referred to as the remaining one of the first to third heat dissipation members.

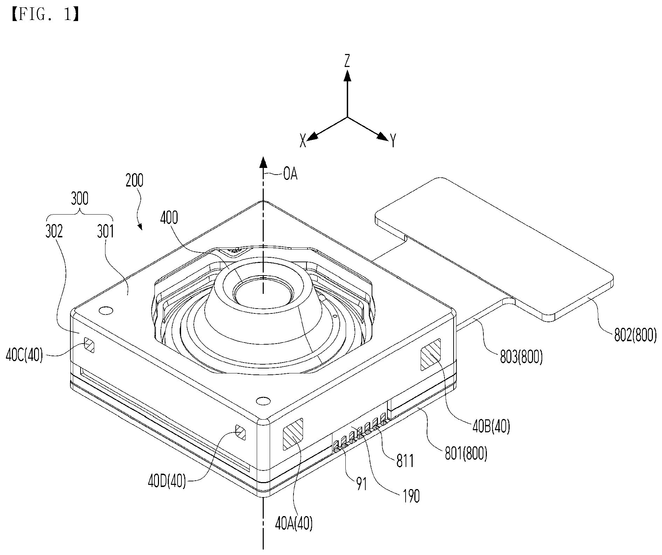

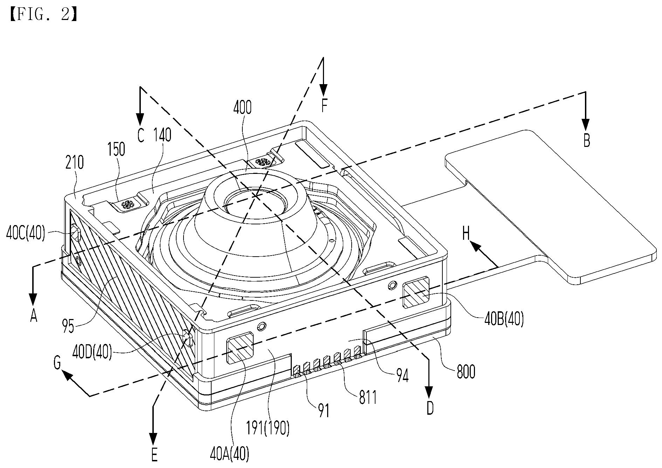

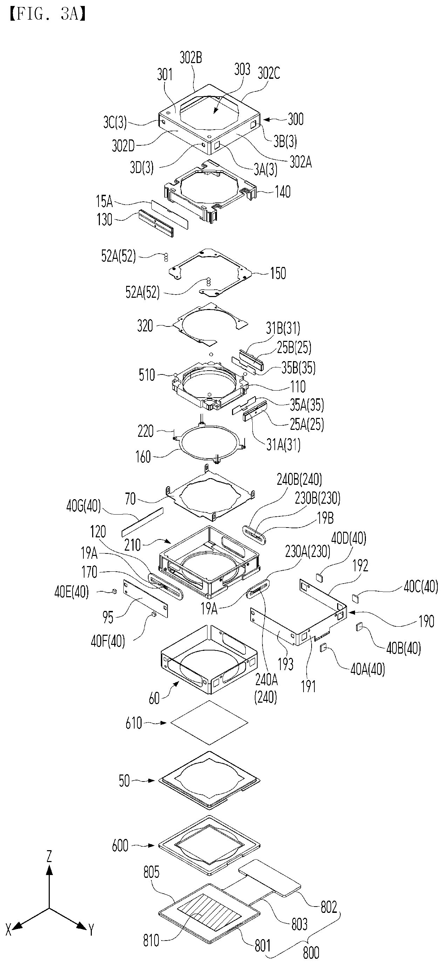

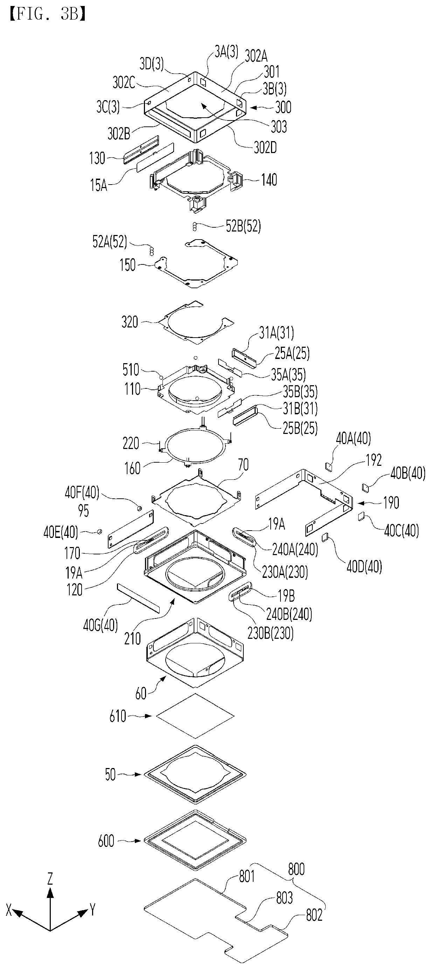

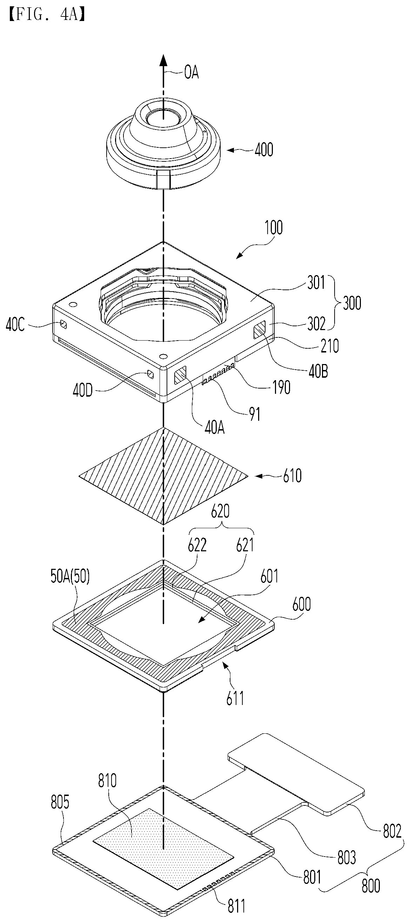

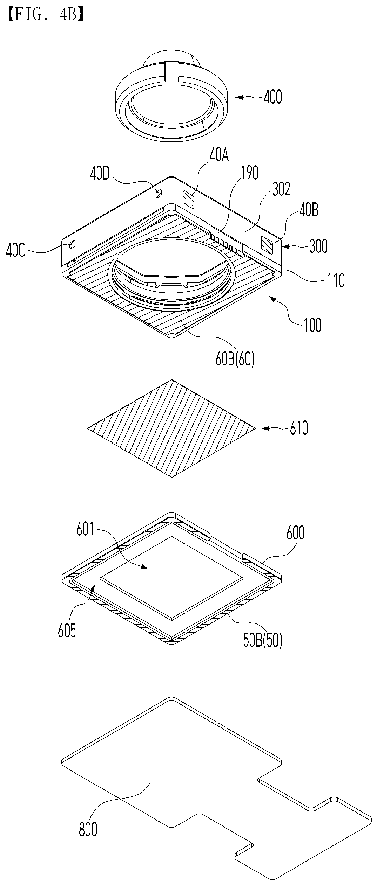

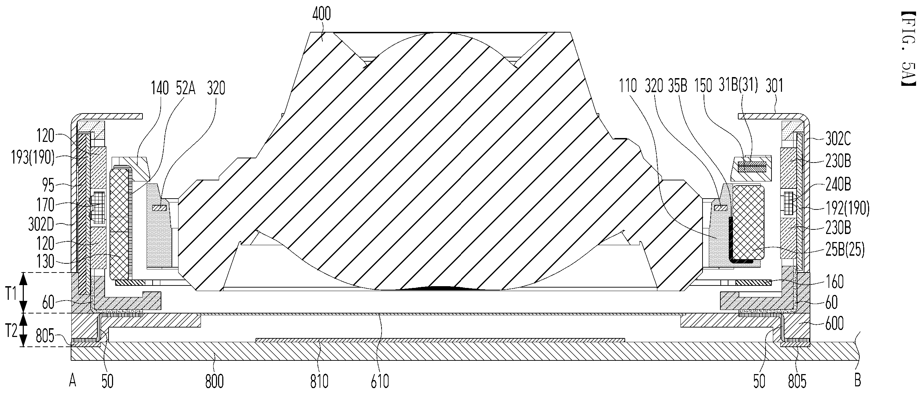

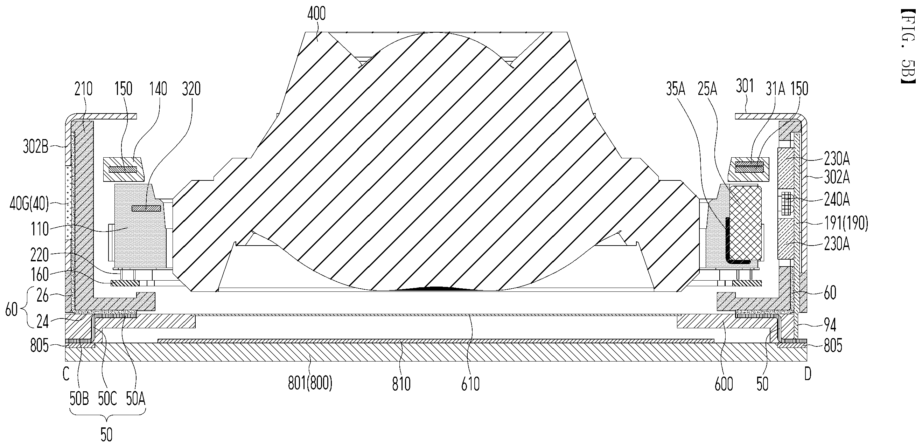

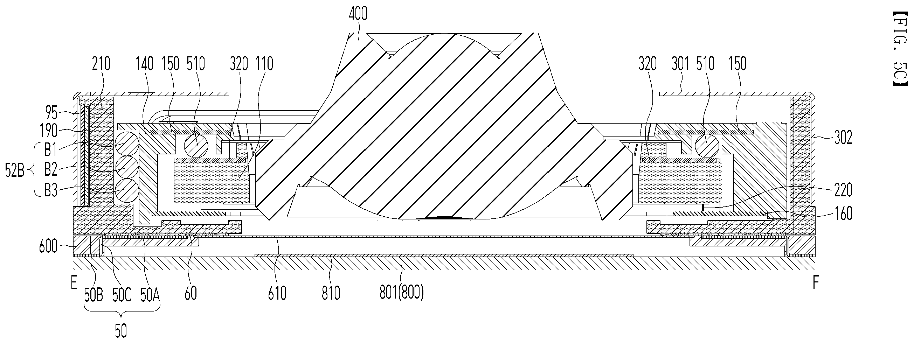

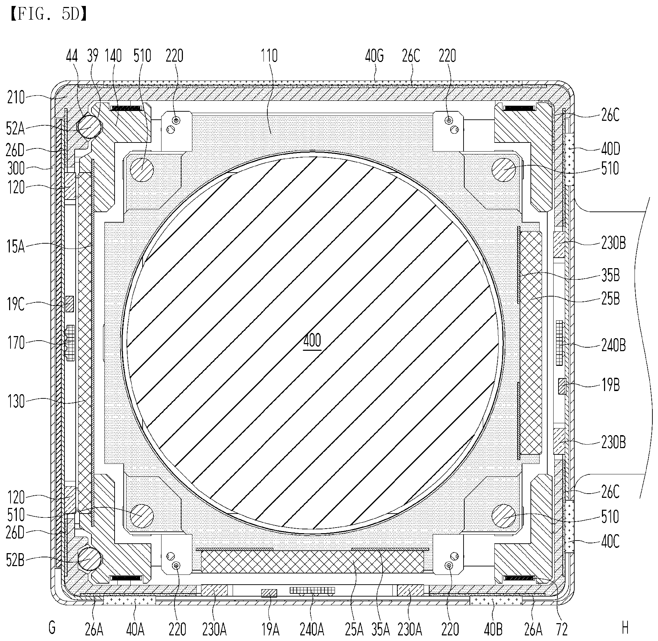

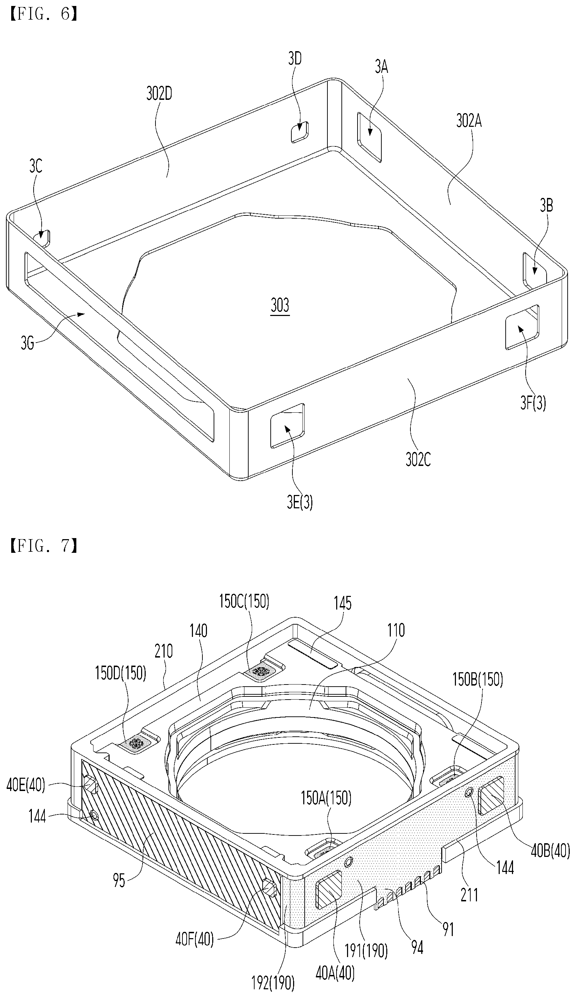

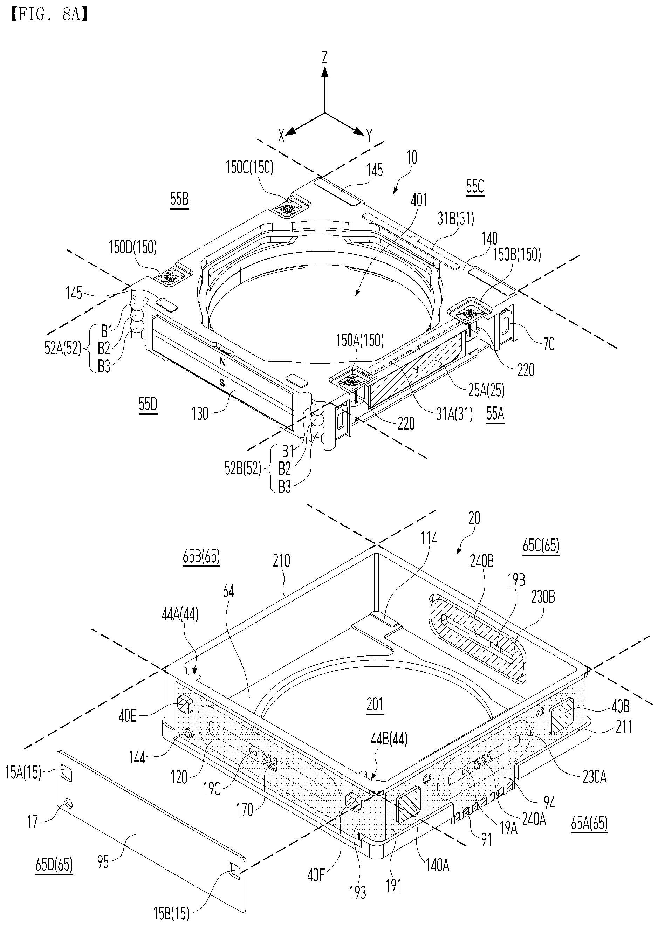

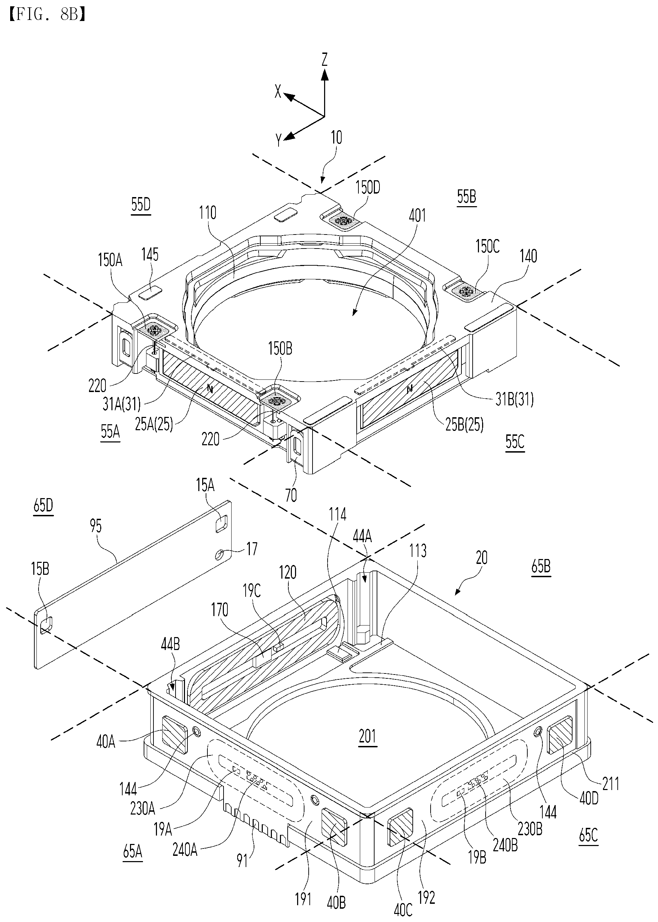

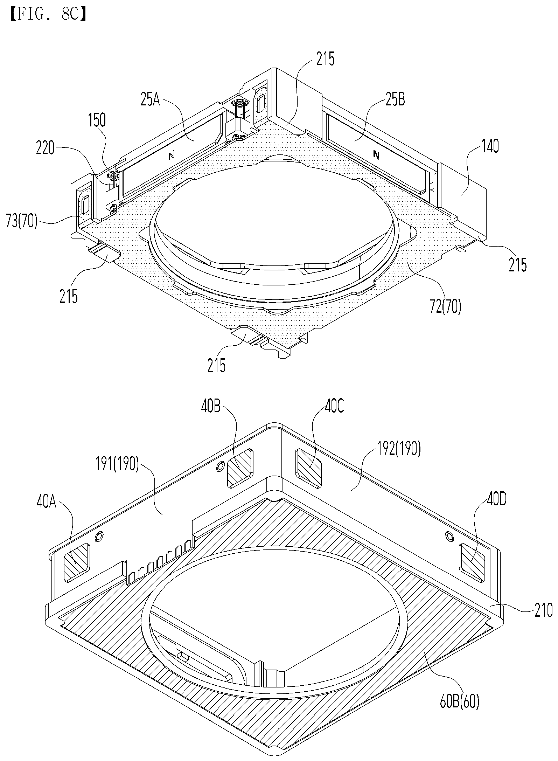

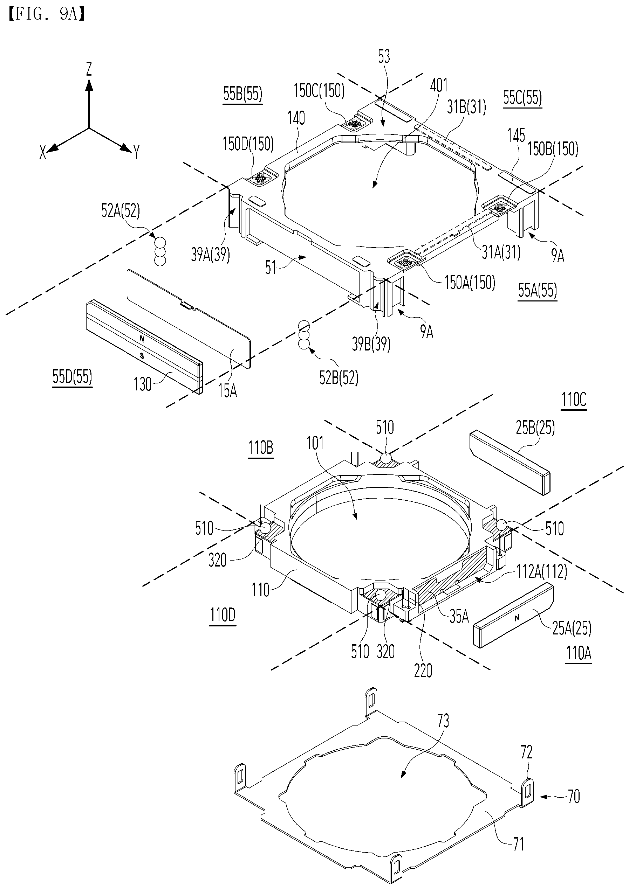

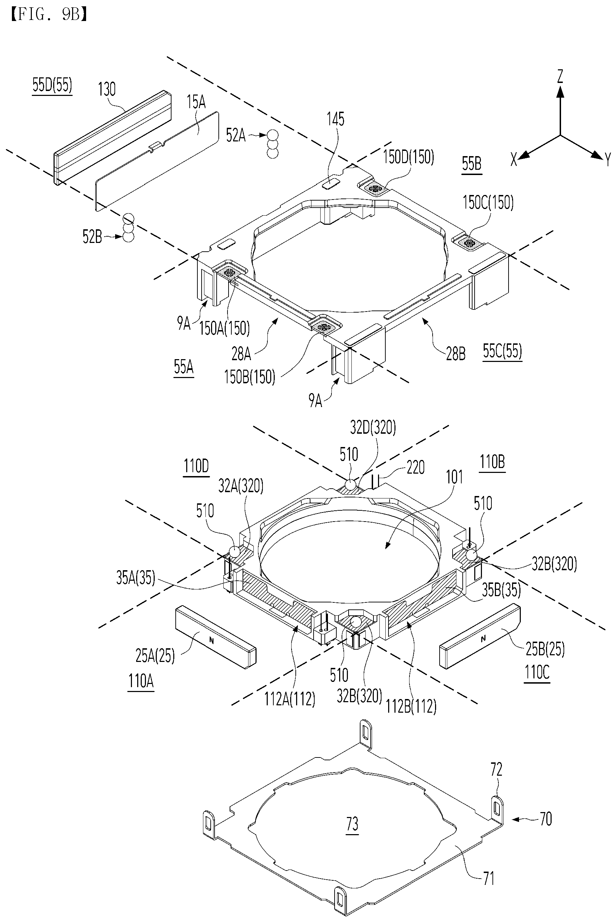

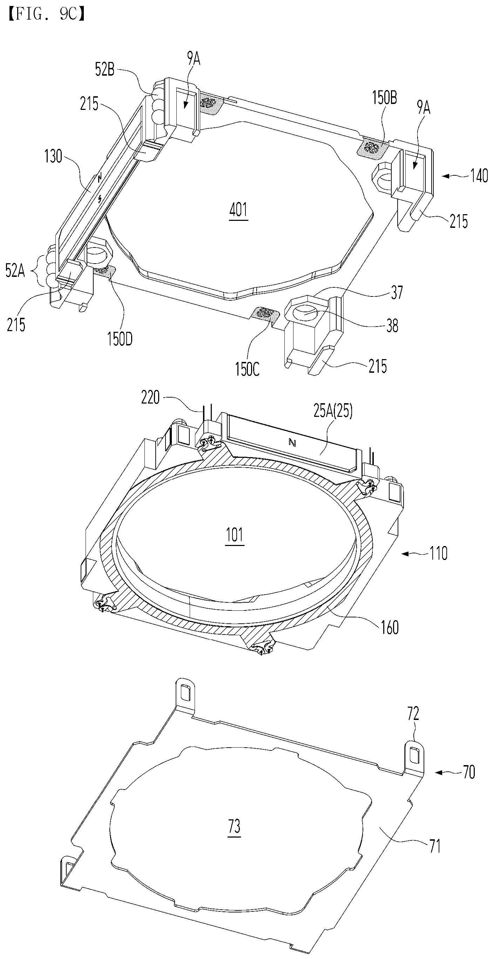

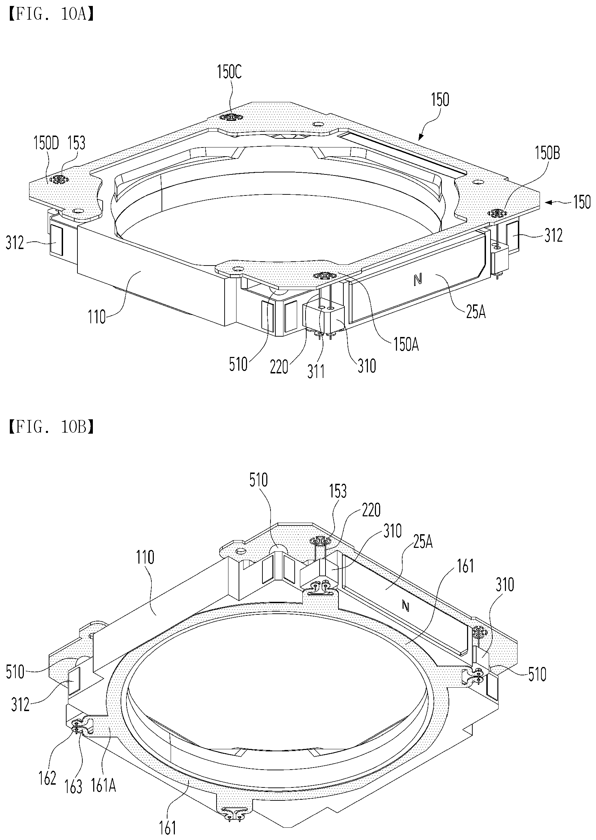

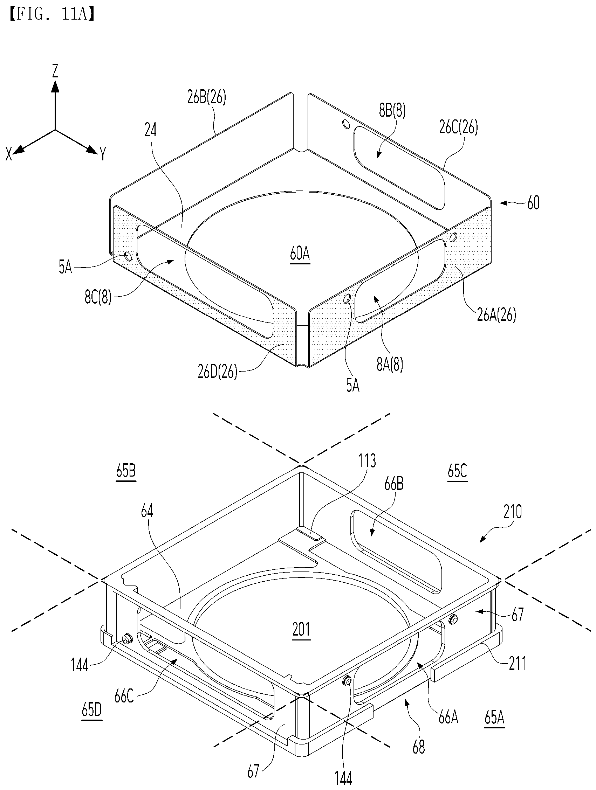

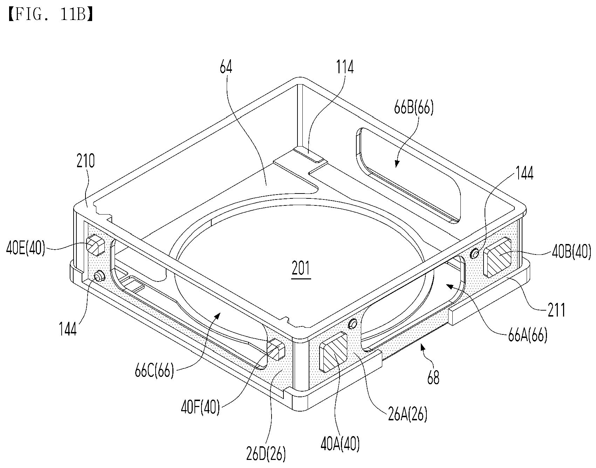

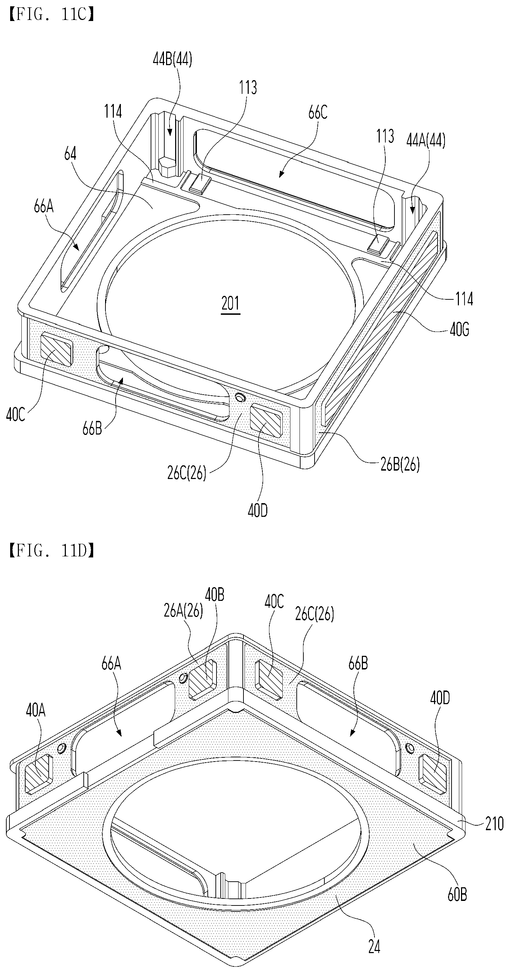

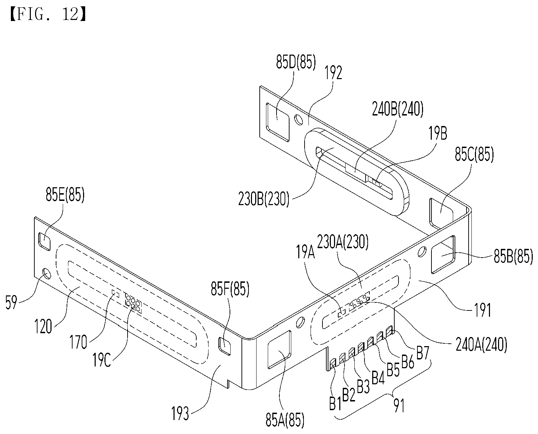

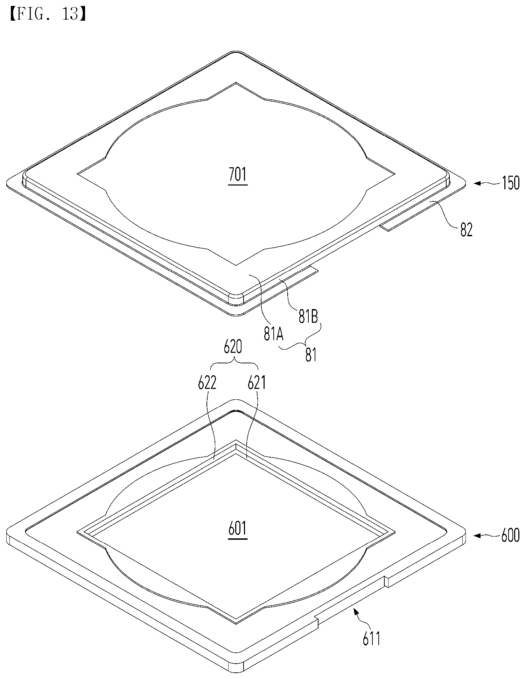

FIG. 1 is a perspective view of a camera device 200 according to an embodiment, FIG. 2 is a perspective view of the camera device 200 with a cover member 300 removed, FIG. 3A is a first exploded perspective view of the camera device 200 excluding a lens module 400, FIG. 3B is a second exploded perspective view of the camera device 200 excluding the lens module 400, FIG. 4A is a first exploded perspective view of the lens module 400, a lens moving apparatus 100, a filter 610, a sensor base 600, an image sensor 810, and a circuit board 800, FIG. 4B is a second exploded perspective view of the lens module 400, the lens moving apparatus 100, the filter 610, the sensor base 600, the image sensor 810, and the circuit board 800, FIG. 5A is a cross-sectional view taken in direction AB in FIG. 2, FIG. 5B is a cross-sectional view taken in direction CD in FIG. 2, FIG. 5C is a cross-sectional view taken in direction EF in FIG. 2, FIG. 5D is a cross-sectional view taken in direction GH in FIG. 2, FIG. 6 is a bottom perspective view of the cover member 300, FIG. 7 is a perspective view of the lens moving apparatus 100 with the cover member 300 removed, FIG. 8A is a first perspective view of a first moving unit and a fixed unit, FIG. 8B is a second perspective view of the first moving unit and the fixed unit, FIG. 8C is a third perspective view of the first moving unit and the fixed unit, FIG. 9A is a first exploded perspective view of the first moving unit, FIG. 9B is a second exploded perspective view of the first moving unit, FIG. 9C is a third exploded perspective view of the first moving unit, FIG. 10A is a coupled perspective view of a bobbin 110, a reinforcing member 150, a ball member 510, and a support member 220, FIG. 10B is a coupled perspective view of the bobbin 110, the reinforcing member 150, the ball member 510, the support member 220, and an elastic member 160, FIG. 11A is an exploded perspective view of a frame 60 and a base 210, FIG. 11B is a first coupled perspective view of the base 210, the frame 60, and a heat dissipation member 40, FIG. 11C is a second coupled perspective view of the base 210, the frame 60, and the heat dissipation member 40, FIG. 11D is a third coupled perspective view of the base 210, the frame 60, and the heat dissipation member 40, FIG. 12 is a coupled perspective view of a circuit board 190, coils 120 and 230, position sensors 170 and 240, and capacitors 19A to 19C, and FIG. 13 is an exploded perspective view of the sensor base 600 and the frame 50.

Referring to FIGs. 1 to 12, the camera device 200 may include a lens moving apparatus 100, a sensor base 600, a filter 610, and a circuit board 800. The camera device 200 may include a lens module 400. The lens module 400 may include a lens and/or a lens barrel. The lens module 400 may be coupled to the lens moving apparatus 100. The lens module 400 may include one or more lenses and a lens barrel configured to accommodate the one or more lenses.

The lens moving apparatus 100 may be a voice coil motor (VCM). The lens moving apparatus 100 may be a lens moving motor. The lens moving apparatus 100 may be an actuator or a lens moving actuator.

The lens moving apparatus 100 may include an AF module to move the lens module 400 in the optical-axis direction. The lens moving apparatus 100 may include an OIS module to move the lens module in a direction intersecting the optical-axis direction or in a direction perpendicular to the optical-axis direction.

The sensor base 600 may be disposed below the lens moving apparatus 100. The sensor base 600 may be disposed between the lens moving apparatus 100 and the circuit board 800. The sensor base 600 may include an opening 601 corresponding to at least one of the image sensor 810, the filter 610, or the lens module 400. The opening 601 may be formed through the sensor base 600 in the optical-axis direction. The opening 601 may allow light that has passed through the lens module 400 or the filter 610 to be incident on the image sensor 810.

The sensor base 600 may include a seating portion 620 in which the filter 610 is disposed or seated. For example, the seating portion 620 may be a recess recessed in an upper surface of the sensor base 600. The seating portion 620 may include a bottom surface 621 having a step relative to the upper surface of the sensor base 600 in the optical-axis direction and a side surface 622 (or sidewall) disposed between the bottom surface 621 and the upper surface of the sensor base 600. For example, the opening 601 may be formed in the bottom surface 621 of the seating portion 620. In another embodiment, the seating portion may be a protruding portion protruding from the upper surface of the sensor base 600.

The sensor base 600 may include a recess 605 formed in a lower surface of the sensor base 600 to avoid spatial interference with the image sensor 810. The recess 605 may be recessed in the lower surface of the sensor base 600. The recess 605 may face the image sensor 810 in the optical-axis direction.

The filter 610 may be disposed on the sensor base 600 or coupled to the sensor base 600. The filter 610 may serve to prevent light within a specific frequency band, among light that has passed through the lens module 400, from being incident on the image sensor 810. The filter 610 may be disposed to be parallel to an x-y plane. The filter 610 may be disposed between the lens module 400 and the image sensor 810. In a modified example, the filter 610 may be disposed on a base 210 of the lens moving apparatus 100. The filter 610 may include an infrared filter. The infrared filter may prevent light in an infrared region from being incident on the image sensor 60.

The camera device 200 may include an adhesive (not shown) disposed between the lens moving apparatus 100 and the sensor base 600 to couple the lens moving apparatus 100 to the sensor base 600. For example, the adhesive may couple the base 210 of the lens moving apparatus 100 to the sensor base 600. The adhesive may include at least one of an epoxy, a thermosetting adhesive, or an ultraviolet-curable adhesive. The adhesive may also serve to prevent foreign substances from entering the lens moving apparatus 100.

Referring to FIGs. 4A, 4B, and 13, the camera device 200 may include a frame 50 disposed on the sensor base 600. The frame 50 may be coupled to the sensor base 600. For example, at least a portion of the frame 50 may be recessed in the sensor base 600, and at least another portion of the frame 50 may be exposed from the sensor base 600. The frame 50 may be integrally formed with the sensor base 600. For example, the frame 50 may be integrally formed with the sensor base 600 through an insert injection molding method. At least a portion of the frame 50 may be embedded in the sensor base 600.

The frame 50 may include an opening 701 or a hollow portion corresponding to, facing, or overlapping the opening 601 of the sensor base 600. The opening 701 may be a through-hole formed through the frame 50.

The frame 50 may include a heat dissipation material having high thermal conductivity. For example, thermal conductivity of the frame 50 may be greater than that of the sensor base 600. For example, the sensor base 600 may be formed through injection molding of a material such as resin or plastic. The frame 50 may be formed of metal. For example, the frame 50 may include graphite. For example, the frame 50 may be a conductive member. In another embodiment, the frame 50 may be a non-conductive member. For example, the frame 50 may include a graphite layer or a graphite sheet. The frame 50 may alternatively be referred to as a "heat dissipation body," a "heat dissipation member," a "metal member," a "graphite member," a "heat dissipation frame," a "heat sink," or a "heat dissipation sheet."

Referring to FIG. 5B, at least a portion 50A of the frame 50 may be exposed from the upper surface of the sensor base 600. At least another portion 50B of the frame 50 may be exposed from the lower surface of the sensor base 210. In addition, the frame 50 may include a portion 50C connecting the portion 50A to the portion 50B. The portion 50A may be one of first to third portions, the portion 50B may be another one of the first to third portions, and the portion 50C may be the remaining one of the first to third portions. The frame 50 may include at least one bent portion.

The frame 50 may include a body 81. The body 81 may include an upper plate 81A and a side plate 81B. At least a portion of the upper plate 81A may be disposed on the upper surface of the sensor base 600. At least a portion of the upper plate 81A may be exposed from the upper surface of the sensor base 600. At least a portion of the side plate 81B may be embedded in the sensor base 600. At least another portion of the side plate 81B may be exposed from the lower surface of the sensor base 600.

The frame 50 may include an extension portion 82 extending from the body 81. At least part of the extension portion 82 may be exposed from the lower surface of the sensor base 600. A lower surface of the extension portion 82 may be exposed from the lower surface of the sensor base 600. The extension portion 82 is provided to increase a contact area with the circuit board 800. For example, the extension portion 82 may extend from the side plate 91B in a direction perpendicular to the optical axis. The extension portion 82 may extend from a lower end of the side plate 91B. The extension portion 82 may be disposed to surround the opening 601 of the sensor base 600. The extension portion 82 may be disposed to surround the recess 605 of the sensor base 600. When viewed in the optical-axis direction or from below, the extension portion 82 may have a line shape having a predetermined width. In another embodiment, part of the extension portion 82 that is exposed from the lower surface of the sensor base 600 may include a plurality of regions spaced apart from each other.

The frame 50 has been described as a component separate from the sensor base 600. However, in another embodiment, the frame 50 may be described as part of the configuration of the sensor base 600, or the sensor base 600 may include the frame 50.

Referring to FIGs. 4A, 4B, and 13, the frame 50 is illustrated as being inserted into the sensor base 600. However, in another embodiment, the frame 50 may be coupled to the sensor base 600 using a coupling member or an adhesive. For example, the frame 50 may be coupled, attached, or fixed to at least one of the lower surface or the side surface of the sensor base 600 using a coupling member or an adhesive. For example, the frame 50 may include a first portion disposed on or coupled to the lower surface of the sensor base 600 and a second portion disposed on or coupled to the upper surface of the sensor base 600. In addition, the frame 50 may include a third portion connecting the first portion to the second portion and disposed on the side surface of the sensor base 600.

The circuit board 800 may be disposed below the sensor base 600. The sensor base 600 may be disposed on the circuit board 800. The circuit board 800 may be a board, a printed circuit board, or a flexible printed circuit board (FPCB). The sensor base 600 may be disposed between the lens moving apparatus 100 and the circuit board 800. The lens moving apparatus 100 may be electrically connected to the circuit board 800. The circuit board 800 may include a plurality of terminals 811 electrically connected to the lens moving apparatus 100.

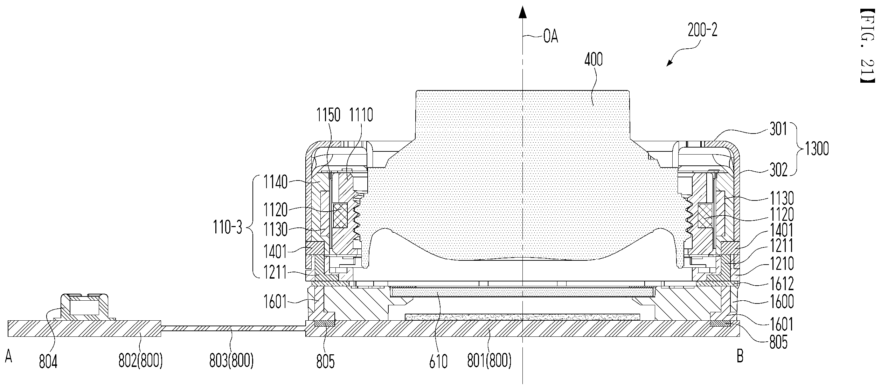

The circuit board 800 may include a first region 801 in which the image sensor 810, the sensor base 600, or the lens moving apparatus 100 is disposed and a third region 803 in which a connector 804 (see FIG. 21) for electrical connection to an external device is disposed. The plurality of terminals 811 may be disposed in the first region 801.

The frame 50 may be connected to the circuit board 800. The frame 50 may be in contact with the circuit board 800. The frame 50 may be connected to or in contact with an upper surface of the circuit board 800. The frame 50 may be connected to or in contact with an upper surface of the first region 801 of the circuit board 800.

The circuit board 800 may include a heat dissipation portion 805. The heat dissipation portion 805 may be connected to the frame 50 of the sensor base 600. The heat dissipation portion 805 may be in contact with the frame 50 of the sensor base 600. For example, the heat dissipation portion 805 may be connected to or in contact with the side plate 81B of the frame 50. For example, the heat dissipation portion 805 may be connected to or in contact with the extension portion 82 of the frame 50. Alternatively, in another embodiment, the heat dissipation portion 805 may be connected to or in contact with the first portion of the frame 50.

The camera device 200 may include a thermally conductive adhesive or a heat dissipation adhesive disposed between the heat dissipation portion 805 and the frame 50. For example, the adhesive may be an epoxy or a thermally conductive epoxy. The thermally conductive adhesive may couple or attach the heat dissipation portion 805 and the frame 50 to each other and may allow heat to be effectively transferred from the heat dissipation portion 805 to the frame 50. The thermally conductive adhesive may couple or attach the heat dissipation portion 805 and the extension portion 82 of the frame 50 to each other. In another embodiment, the thermally conductive adhesive may couple or attach the heat dissipation portion 805 and the first portion of the frame 50 to each other.

The heat dissipation portion 805 may be disposed in the first region 801 of the circuit board 800. The heat dissipation portion 805 may correspond to, face, or overlap the frame 50 in the optical-axis direction.

The heat dissipation portion 805 may include a heat dissipation material. The heat dissipation portion 805 may be formed of metal. For example, the heat dissipation portion 805 may be a copper foil. For example, the heat dissipation portion 805 may be formed of a metal, such as copper, silver, gold, or aluminum, or may be formed of a metal alloy including at least one of these materials.

For example, the heat dissipation portion 805 may include graphite. For example, the heat dissipation portion 805 may be a conductive member. In another embodiment, the heat dissipation portion 805 may be a non-conductive member. For example, the heat dissipation portion 805 may include a conductive layer, a metal layer, a graphite layer, or a graphite sheet. The heat dissipation portion 805 may alternatively be referred to as a "heat dissipation body," a "heat dissipation metal," a "heat dissipation member," a "heat dissipation pad," a "heat dissipation terminal," a "heat dissipation layer," a "metal layer," or a "heat dissipation sheet."

The heat dissipation portion 805 may be disposed at an edge of an upper surface of the first region 801. The heat dissipation portion 805 may be disposed to surround the image sensor 810. The heat dissipation portion 805 may have a polygonal or circular ring shape. In another embodiment, the heat dissipation portion 805 may include a plurality of heat dissipation portions spaced apart from each other. In another embodiment, the heat dissipation portion 805 may be positioned on one side or the other side of the image sensor 810.

The heat dissipation portion 805 may be connected to a ground layer of the circuit board 800. In another embodiment, the heat dissipation portion 805 may not be connected to the ground layer of the circuit board 800.

The image sensor 810 may be disposed on the circuit board 800. The image sensor 810 may be disposed in the first region 801 of the circuit board 800. For example, the image sensor 810 may be positioned inside the heat dissipation portion 805.

The image sensor 810 may be a component on which light that has passed through the lens and the filter 610 is incident and on which an image is formed. The image sensor 810 may be electrically connected to the circuit board 800. The image sensor 810 may convert light radiated to an effective image area or an active area (or an imaging area) of the image sensor 810 into an electrical signal.

The image sensor 810 may be disposed to correspond to, face, or overlap the lens module 400 (or the lens) or the filter 610 in the optical-axis direction. The image sensor 810 may be disposed such that the optical axis thereof coincides with that of the lens.

Heat generated from the image sensor 810 may be transferred to the frame 50 of the sensor base 600 through the heat dissipation portion 805 of the circuit board 800.

The camera device 200 may further include a motion sensor (not shown). The motion sensor may be disposed or mounted on the circuit board 800. The motion sensor may output information on rotating angular speed generated by movement of the camera device 200. The motion sensor may include a gyro sensor having two or more axes or an angular speed sensor.

The camera device 200 may further include a controller (not shown). The controller may be disposed on the circuit board 800. The controller may be electrically connected to the circuit board 800. The controller may be electrically connected to the motion sensor. The controller may be electrically connected to the lens moving apparatus 100. The controller may be electrically connected to at least one of coils included in the lens moving apparatus 100. The controller may individually control a direction, magnitude, and amplitude of current supplied to at least one of the coils of the lens moving apparatus 100. The controller may be electrically connected to at least one of position sensors included in the lens moving apparatus 100. The controller may control at least one of the position sensors included in the lens moving apparatus 100. The controller may control the lens moving apparatus 100 to perform an autofocus function and/or an optical image stabilization function. Furthermore, the controller may perform autofocus feedback control and/or optical image stabilization feedback control with respect to the lens moving apparatus 100.

Referring to FIG. 8A, the lens moving apparatus 100 may include a moving unit 10 and a fixed unit 20. The fixed unit 20 may be a portion or element that remains relatively fixed during movement of the moving unit 10. In addition, the lens moving apparatus 100 may include a "driving unit" configured to move the moving unit 10.

The moving unit 10 may move relative to the fixed unit 20. The moving unit 10 may include a "first moving unit" that moves during AF driving. The moving unit 10 may include a "second moving unit" that moves during OIS driving. The second moving unit may move during both AF driving and OIS driving. The first moving unit may include the second moving unit. A lens may be coupled to the second moving unit. The first moving unit may be disposed between the second moving unit and the fixed unit 20.

The lens moving apparatus 100 may include a cover member 300. The cover member 300 may be a case or a cover. The cover member 300 may accommodate at least one of the first moving unit or the second moving unit. The cover member 300 may be disposed on the base 210.

For example, the cover member 300 may accommodate at least one of a housing 140 or a bobbin 110. The cover member 300 may accommodate at least one of a circuit board 190, coils 120 and 230, sensors 170 and 240, capacitors 19A to 19C, magnets 130 and 25, the bobbin 110, the housing 140, components coupled to the bobbin 110 and to the housing 140, or ball members 510 and 52.

The cover member 300 may alternatively be referred to as a shield member or a shield cap. The cover member 300 may block electromagnetic interference (EMI). In this case, the cover member 330 may be an EMI shield can.

The cover member 300 may have a box shape with an open lower portion. The cover member 300 may include an upper plate 301 and a side plate 302. The upper plate 301 may be disposed above at least one of the first moving unit or the second moving unit. Upward movement of the first moving unit may be limited by contact between the first moving unit and the upper plate 301. The upper plate 301 may include an opening 303 or a hollow portion through which light passes. The opening 303 may be a hole formed through the upper plate 301.

The side plate 302 may extend from the upper plate 301. The side plate 302 may be coupled to the base 210. The side plate 302 may be coupled to a stepped portion 211 protruding from a lower end of an outer surface of the base 210. The side plate 302 may include a plurality of side plates 302A to 302D. The side plate 302 may include a first side plate 302A and a second side plate 302B, which are positioned opposite each other in the second direction (e.g., the y-axis direction), and a third side plate 302C and a fourth side plate 302D, which are positioned opposite each other in the third direction (e.g., the x-axis direction).

The cover member 300 may include at least one hole 3 formed in at least one of the upper plate 301 or the side plate 302. For example, the at least one hole 3 may be formed in the side plate 302 of the cover member 300. The at least one hole 3 may be formed through the side plate 302. In another embodiment, the at least one hole 3 may include an opening open toward a lower end of the side plate 302. For example, the cover member 300 may include at least one hole 3A to 3G formed in at least one of the side plates 302A to 302D. The hole 3 in the cover member 300 may have a shape corresponding to or matching a heat dissipation member 40 to be described later, and may face or overlap the heat dissipation member 40.

In another embodiment, the cover member 300 may include at least one hole (not shown) formed in at least one of the upper plate 301 or the side plate 302 to allow injection of an adhesive.

The lens moving apparatus 100 may include a base 210. The base 210 may include a cavity to accommodate the first moving unit. For example, the base 210 may include a cavity to accommodate the housing 140. For example, the base 210 may have a box shape with an open upper portion. The base 210 may be disposed outside the housing 140. At least a portion of the base 210 may be disposed between the housing 140 and the cover member 300. The base 210 may be coupled or fixed to the cover member 300.

The base 210 may include a side portion 65. The base 210 may include a lower portion 64 (or a lower plate) disposed below the side portion 65. For example, the side portion 65 of the base 210 may include a plurality of side portions 65A to 65D. The first and second side portions 65A and 65B may be positioned opposite each other in the second direction (e.g., the y-axis direction), and the third and fourth side portions 65C and 65D may be positioned opposite each other in the third direction (e.g., the x-axis direction).

The base 210 may include a recess 67 in which the circuit board 190 is seated or disposed. The recess 67 may be disposed on the side portion 65 of the base 210. The recess 67 may be recessed in an outer surface of the side portion 26 of the base 210. For example, the recess 67 may be disposed on the side portions 65A, 65C, and 65D of the base 210. In another embodiment, the recess 67 may be omitted.

The base 210 may include an opening 201 or a hollow portion corresponding to, facing, or overlapping the bobbin 110 or the lens module 400. The opening 201 may be formed through the base 210 in the optical-axis direction. For example, the opening 201 may be formed in the lower portion 64 of the base 210.

The base 210 may include a recess 44 in which at least a portion of the ball member 52 is received or disposed. The recess 44 may alternatively be referred to as a receiving recess, a guide recess, a guide portion, a rail, or a guide rail. The number of recesses 44 may be one or more. The recess 44 may be recessed in an inner surface of the side portion of the base 210. The recess 44 may be disposed on at least one of the first to fourth side portions 65A to 65D of the base 210. One or more recesses 44 may be formed in any one side portion of the base 210. In another embodiment, one or more recesses 44 may be formed in different side portions of the base 210. For example, the recess 44 may include a first recess 44A and a second recess 44B, which are formed in one side portion (e.g., 65D) of the base 210. For example, the two recesses 44A and 44B may be disposed on opposite sides of the coil 120. For example, at least a portion of the magnet 130 may be disposed between the first recess 44A and the second recess 44B. At least a portion of the magnet 130 may overlap the recesses 44A and 44B in the second direction. For example, when viewed from above, the recess 44 may have a polygonal shape (e.g., a triangular, quadrangular, or pentagonal shape). Alternatively, in another embodiment, the recess 117 may have a V-shape or a U-shape.

Referring to FIGs. 8A, 8B, and 11C, the base 210 may include a protruding portion 113. The protruding portion 113 may be formed on an upper surface of the lower portion 64 of the base 210. The protruding portion 113 may prevent overflow of a lubricant (e.g., grease) applied to the ball member 52. The protruding portion 113 may protrude from the upper surface of the lower portion 64. At least a portion of the protruding portion 113 may be formed to surround the opening 201 of the base 210. The protruding portion 1130 may alternatively be referred to as a "blocking wall" or a "dam."

The base 210 may include at least one protrusion 114 corresponding to, facing, or overlapping a lower stopper 215 of the housing 140. The protrusion 114 may protrude from the upper surface of the lower portion 64 of the base 210. The protrusion 114 may be disposed to be spaced apart from the protruding portion 113. The protrusion 114 may include a plurality of protrusions. The protrusion 113 may alternatively be referred to as a "stopper."

When the first moving unit moves in the optical-axis direction, the lower stopper 215 of the housing 140 may contact the protrusion 114 of the base 210. That is, the protrusion 114 of the base 210 and the lower stopper 215 of the housing 140 may serve as stoppers for limiting downward movement of the first moving unit (e.g., the housing 140).

The base 210 may include a seating portion 66 in which the coils 120 and 230 are disposed. The seating portion 66 may be formed in at least one of the side portions 65A to 65D of the base 210. Referring to FIG. 11B, the seating portion 66 may have a hole shape penetrating the side portion (e.g., 65A, 5C, or 65D) of the base 210. In another embodiment, the seating portion 66 may have a recess or groove shape recessed in the outer surface or the inner surface of the side portion of the base 210.

For example, the base 210 may include a seating portion 66A in which a first coil unit 230A of the coil 230 is disposed, a seating portion 66B in which a second coil unit 230B is disposed, and a seating portion 66C in which the coil 120 is disposed.

The base 210 may include a stepped portion 211 corresponding to, facing, or overlapping the side plate 302 of the cover member 300. The stepped portion 211 may protrude from the outer surface of the side portion 65 of the base 210. The stepped portion 211 may be positioned at a lower side or a lower portion of the side portion 65.

The base 210 may include a recess 68 in which an extension portion 94 of the circuit board 190 is disposed. The recess 68 may be disposed on one side portion 65A of the base 210. The recess 68 may be recessed in the outer surface of the side portion 65A. For example, the recess 68 may be positioned below the seating portion 66A of the base 210. For example, the recess 68 may be recessed in the stepped portion 211.

The base 210 may include a coupling portion 144 to be coupled to the circuit board 190. The coupling portion 144 may be coupled to a hole 59 in the circuit board 190. The coupling portion 144 may be disposed on the side portion (e.g., 65A, 65C, or 65D) of the base 210 on which the circuit board 190 is disposed. The coupling portion 144 may have a protrusion shape protruding from the outer surface of the side portion (e.g., 65A, 65C, or 65D) of the base 210.

Referring to FIGs. 11A to 11D, the lens moving apparatus 100 may include a frame 60 disposed on the base 210. The frame 60 may be coupled to the base 210.

At least a portion of the frame 60 may correspond to, face, or overlap at least a portion of the frame 50 disposed on the sensor base 600 in the optical-axis direction.

The frame 60 may be connected to the frame 50. At least a portion of the frame 60 may be connected to at least a portion of the frame 50 disposed on the sensor base 600. At least a portion of the frame 60 may be in contact with at least a portion of the frame 50 disposed on the sensor base 600. At least a portion of the frame 60 may be coupled or attached to at least a portion of the frame 50 disposed on the sensor base 600 using an adhesive or a heat dissipation adhesive. The adhesive may be an epoxy or a thermally conductive epoxy. Heat transferred from the heat dissipation portion 805 to the frame 50 may be transferred from the frame 50 to the frame 60 disposed on the base 210 of the lens moving apparatus 100.

For example, at least a portion of the frame 60 may be recessed in the base 210, and at least another portion of the frame 60 may be exposed from the base 210. The frame 60 may be integrally formed with the base 210. For example, the frame 60 may be integrally formed with the base 210 through an insert injection molding method. At least a portion of the frame 60 may be embedded in the base 210.

The frame 60 may include a heat dissipation material having high thermal conductivity. For example, thermal conductivity of the frame 60 may be greater than that of the base 210. For example, the base 210 may be formed through injection molding of a material such as resin or plastic. For example, the frame 60 may be formed of metal. The frame 60 may include an opening 60A or a hollow portion corresponding to, facing, or overlapping the opening 201 of the base 210. The opening 60A may be a through-hole formed through the frame 60.

For example, the frame 60 may include graphite. For example, the frame 60 may be a conductive member. In another embodiment, the frame 60 may be a non-conductive member.

For example, the frame 60 may include a graphite layer or a graphite sheet. The frame 60 may alternatively be referred to as a "heat dissipation body," a "heat dissipation member," a "heat dissipation frame," a "metal member," a "graphite member," a "heat sink," or a "heat dissipation sheet."

The frame 60 may include a body 24. The body 24 may alternatively be referred to as a "lower plate" or a "plate." The body 24 may be disposed on the lower portion 64 of the base 210. The body 24 may be coupled to the lower portion 64 of the base 210. Referring to FIG. 4B, at least a portion 60B of the body 24 may be exposed or open from the base 210. The frame 60 may have a flat plate shape in order to increase a contact area with the circuit board 190. In another embodiment, the frame 60 may include irregularities or a bent portion.

Referring to FIG. 11D, at least a portion of a lower surface 60B of the body 24 may be exposed or open from the lower surface of the base 210. An upper surface of the body 24 may be recessed in the base 210. A region (exposed region) of the lower surface 60B of the body 24 exposed from the lower surface of the base 210 may be disposed to surround the opening 201 of the base 210. This serves to increase an exposed area of the lower surface 60B of the body 24, thereby improving heat dissipation efficiency. In another embodiment, the lower surface 60B of the body 24 may include a plurality of exposed regions exposed from the lower surface of the base 210, and the plurality of exposed regions may be disposed to be spaced apart from each other.

At least a portion 60B of the frame 60 exposed from the lower surface of the base 210 may be connected to the frame 50 disposed on the sensor base 600. At least a portion 60B of the frame 60 may be in contact with the frame 50 disposed on the sensor base 600. At least a portion 60B of the frame 60 may be coupled or attached to the frame 50 disposed on the sensor base 600 using an adhesive or a heat dissipation adhesive. At least a portion 60B of the frame 60 may be connected to at least a portion of the upper plate 81A of the frame 50. At least a portion 60B of the frame 60 may be in contact with the upper plate 81A of the frame 50. At least a portion 60B of the frame 60 may be coupled or attached to the upper plate 81A of the frame 50 using an adhesive or a heat dissipation adhesive.

The frame 60 may include a side plate 26 connected to the body 24. A lower portion or a lower end of the side plate 26 may be connected to an edge of the body 24. The side plate 26 may alternatively be referred to as an "extension portion." At least a portion of the side plate 26 may be coupled to the base 210. The side plate 26 may be disposed on the side portion 65 of the base 210. The side plate 26 may be coupled to the side portion 65 of the base 210. At least a portion of the side plate 26 may be exposed or open from the base 210. At least a portion of the side plate 26 may be exposed or open from the outer surface of the side portion 65 of the base 210.

The number of side plates 26 may be one or more. For example, the frame 60 may include a plurality of side plates 26A to 26D. The plurality of side plates 26A to 26D may correspond to the plurality of side portions 65A to 65D of the base 210.

The plurality of side plates 26A to 26D may be spaced apart from each other. At least a portion of the base 210 may be disposed between the side plates 26A to 26D spaced apart from each other. Accordingly, coupling between the base 210 and the side plates 26A to 26D may be enhanced. In another embodiment, at least two of the side plates 26A to 26D may be connected to or in contact with each other.

Each of the plurality of side plates 26A to 26D may be disposed on a corresponding one of the side portions 65A to 65D of the base 210. At least a portion of each of the plurality of side plates 26A to 26D may be exposed or open from an outer surface of a corresponding one of the side portions 65A to 65D of the base 210.

The side plate 26 may include an opening 8 corresponding to the seating portion 66 formed in the side portion 65 of the base 210. For example, the opening 8 may be a hole formed through the side plate 26. A first opening 8A may be formed in the first side plate 26A, a second opening 8B may be formed in the third side plate 26C, and a third opening 8C may be formed in the fourth side plate 26D.

The side plate 26 may include at least one escape portion 5A to avoid spatial interference with the coupling portion 144 of the base 210. For example, the escape portion 5A may be a recess formed through the side plate 26. However, in another embodiment, the escape portion 5A may be formed in a recess shape.

The frame 60 has been described as a component separate from the base 210. However, in another embodiment, the frame 60 may be described as part of the configuration of the base 210, or the base 210 may include the frame 60.

The lens moving apparatus 100 may include a heat dissipation member 40. The heat dissipation member 40 may be connected to at least one of the frame 60 or the frame 50.

The heat dissipation member 40 may be connected to the frame 60. The lens moving apparatus 100 may include at least one heat dissipation member 40 disposed on the frame 60. At least a portion of the heat dissipation member 40 may be exposed from the cover member 300. The heat dissipation member 40 may be connected to the cover member 300. For example, the heat dissipation member 40 may be connected to the side plate 302 of the cover member 300.

The heat dissipation member 40 may include a heat dissipation material having high thermal conductivity. For example, thermal conductivity of the heat dissipation member 40 may be higher than that of the base 210. The description of the material of the frame 60 may be applied directly or analogously to the heat dissipation member 40.

For example, the heat dissipation member 40 may include graphite. For example, the heat dissipation member 40 may be a conductive member. In another embodiment, the heat dissipation member 40 may be a non-conductive member. The heat dissipation member 40 may alternatively be referred to as a "heat dissipation body," a "heat dissipation bridge," a "thermally conductive part," a "heat dissipation part," or a "heat dissipation tape."

The heat dissipation member 40 may be coupled to the frame 60 using an adhesive or a heat dissipation adhesive. For example, the heat dissipation member 40 may be coupled to the frame 60 using a thermally conductive epoxy. The heat dissipation member 40 may be coupled to the side plate 26 of the frame 60. For example, the heat dissipation member 40 may be disposed on one surface (e.g., side surface) of the side plate 26 exposed or open from the base 210. The heat dissipation member 40 may be coupled to one surface (e.g., side surface) of the side plate 26 exposed or open from the base 210. One or more heat dissipation members 40 may be disposed on each of the side plates 26A to 26D.

For example, two heat dissipation members 40A and 40B may be disposed on the first side plate 26A. The heat dissipation members 40A and 40B may be disposed on opposite sides of the coil unit 230A. Two heat dissipation members 40C and 40D may be disposed on the third side plate 26C. The heat dissipation members 40C and 40D may be disposed on opposite sides of the coil unit 230B. At least one heat dissipation member 40G may be disposed on the fourth side plate 26D.

The heat dissipation members disposed on the respective side plates 26A to 26D may be provided in the same number or in different numbers. In addition, the heat dissipation members disposed on the respective side plates 26A to 26D may have the same size or area or may have different sizes or areas. The number of heat dissipation members 40 disposed on each of the side plates 26A to 26D may be one or two or more. A frame according to another embodiment may include a side plate on which the heat dissipation member 40 is not disposed.

Referring to FIGs. 11A to 11D, the frame 60 is illustrated as being inserted into the base 210. However, in another embodiment, the frame 60 may be coupled to the base 210 using a coupling member or an adhesive. The frame 60 may be coupled, attached, or fixed to at least one of the lower portion 64 or the side portion 65 of the base 210 using a coupling member or an adhesive. For example, the body 24 may be coupled, attached, or fixed to the lower portion 64 of the base 210. The body 24 may be coupled, attached, or fixed to the lower surface of the lower portion 64 of the base 210. The side plate 26 may be coupled, attached, or fixed to the side portion 65 of the base 210. The side plate 26 may be coupled, attached, or fixed to the outer surface of the side portion 65 of the base 210.

The heat dissipation member 40 may pass through at least a portion of the circuit board 190 and may be exposed from the cover member 300. For example, the heat dissipation member 40 may pass through an opening 85 of the circuit board 190, and at least a portion of the heat dissipation member 40 may be disposed in the hole 3 in the cover member 300. The heat dissipation member 40 may be exposed or open from the side plate 302 of the cover member 300 through the hole 3 in the cover member 300. The heat dissipation member 40 may be in contact with the cover member 300. For example, the heat dissipation member 40 may be in contact with the side plate 302 of the cover member 300. In another embodiment, the heat dissipation member 40 may not be in contact with the cover member 300.

In another embodiment, the cover member 300 may not include the hole 3, and the heat dissipation member 40 may be in contact with the side plate 302 of the cover member 300. For example, the heat dissipation member 40 may be in contact with the inner surface of the side plate 302. In still another embodiment, some of the heat dissipation members may pass through the hole 3 in the side plate 302 of the cover member 300, and others of the heat dissipation members may be in contact with the inner surface of the side plate 302 of the cover member 300.

Heat transferred from the frame 50 to the frame 60 disposed on the base 210 of the lens moving apparatus 100 may be transferred to the heat dissipation member 40, and may be dissipated to the outside of the cover member 300 through the heat dissipation member 40.

In another embodiment in which the cover member 300 does not include the hole 3 and the heat dissipation member 40 is in contact with the side plate 302 of the cover member 300, heat transferred from the frame 60 to the heat dissipation member 40 may be dissipated through the heat dissipation member 40 and the cover member 300.

The lens moving apparatus 100 may include a circuit board 190. The circuit board 190 may be included in the fixed unit. The circuit board 190 may be disposed on the base 210 or coupled to the base 210. At least a portion of the circuit board 190 may be connected to the frame 60.

The circuit board 190 may be disposed on the side portion 65 of the base 210. For example, the circuit board 190 may be disposed on the side portions 65A, 65C, and 65D of the base 210. The circuit board 190 may include a first board 191, a second board 192, and a third board 193. For example, the circuit board 190 may be coupled to the side portion 65 of the base 210.

The first board 191 may be disposed on the first side portion 65A of the base 210. The second board 192 may be disposed on the third side portion 65C of the base 210. The first board 193 may be disposed on the fourth side portion 65D of the base 210. The circuit board 190 may include a bent portion or a curved portion. For example, the circuit board 190 may include bent portions positioned between the first board 191 and the second board 192 and between the first board 191 and the third board 193.

The circuit board 190 may be disposed on the frame 60 or coupled to the frame 60. The circuit board 190 may be disposed on at least a portion of the frame 60. The circuit board 190 may be disposed on the side plate 26 of the frame 60 or coupled to the side plate 26. For example, the circuit board 190 may be disposed on the outer surface of the side plate 26. The circuit board 190 may be disposed on at least a portion of the frame 60 exposed from the base 210. The circuit board 190 may be in contact with the frame 60.

The first to third boards 191 to 193 may be disposed on the side plate 26 of the frame 60. Each of the first to third boards 191 to 193 may be disposed on or coupled to a corresponding one of the side plates 26A, 26C, and 26D. In another embodiment, at least a portion of the circuit board 190 may be coupled to the side portion 65 of the base 210.

The circuit board 190 may include an end portion 91. The terminal portion 91 may include a plurality of terminals B1 to B7. The number of terminals of the terminal portion 91 may be two or more.

The circuit board 190 may be a printed circuit board or a flexible printed circuit board (FPCB).

The circuit board 190 may be electrically connected to the circuit board 800. The terminal portion 91 of the circuit board 190 may be electrically connected to the plurality of terminals 811 of the circuit board 800 using solder or a conductive adhesive. In order to facilitate electrical connection to the terminals 811, the circuit board 190 may include an extension portion 94 extending from one (e.g., 191) of the first to third boards 191 to 193. The terminal portion 91 may be formed on the extension portion 94. The plurality of terminals B1 to B7 of the terminal portion 91 may be disposed in a line at a lower end of the extension portion 94.

The circuit board 190 may include at least one opening 85. For example, the opening 85 may be a hole formed through the circuit board 190. For example, the opening 85 may be disposed at a position corresponding to the heat dissipation member 40, and the heat dissipation member 40 may pass through the opening 85 of the circuit board 190. The opening 85 may prevent spatial interference between the heat dissipation member 40 and the circuit board. Because the heat dissipation member 40 passes through the opening 85, at least a portion of the heat dissipation member 40 and the circuit board 190 may be disposed to overlap in the optical-axis direction. Accordingly, a length of the lens moving apparatus 100 in the second direction or the third direction may be reduced, and a size of the camera device in a direction perpendicular to the optical axis may be reduced.

For example, the first board 191 may include at least one opening 85A and 85B. For example, two openings 85A and 85B may be disposed on opposite sides of the coil unit 230A. The second board 192 may include at least one opening 85C and 85D. For example, two openings 85C and 85D may be disposed on opposite sides of the coil unit 230B. The third board 193 may include at least one opening 85E and 85F. For example, two openings 85E and 85F may be disposed on opposite sides of the coil 120.

The circuit board 190 may include at least one hole 59 coupled to at least one coupling portion 144 of the base 210.

In another embodiment, the circuit board 190 may not include the opening 85, and the heat dissipation member 40 may be disposed on the circuit board 190. For example, the heat dissipation member 40 may be disposed on an outer side surface of the circuit board 190. The heat dissipation member 40 may be disposed on one surface of the circuit board 190 facing the side plate 302 of the cover member 300. The heat dissipation member 40 may be positioned opposite the coil 120.

The lens moving apparatus 100 may include a pressing member 95 to press the ball member 52. The pressing member 95 may allow the ball member 52 to be in close contact with the fixed unit (e.g., the base 210) and the first moving unit (e.g., the housing 140). In addition, the pressing member 95 may pull the first moving unit (e.g., the housing 140) toward the fixed unit (e.g., the base 210). The pressing member 95 may alternatively be referred to as a "contacting member" or an "attracting member."

The pressing member 95 may be disposed on the fixed unit. For example, the pressing member 95 may be disposed on the base 210. For example, the pressing member 95 may be disposed on the circuit board 190. For example, the pressing member 95 may be disposed on an outer side surface of the circuit board 190. The pressing member 95 may be coupled to the base 210 or the circuit board 190. The pressing member 95 may be disposed on the fourth side portion 65D of the base 210 or coupled to the fourth side portion 65D. The pressing member 95 may be disposed on or coupled to the third board 193. The pressing member 95 may be disposed between the side plate 302d of the cover member 300 and the side portion 65D of the base 210.

The pressing member 95 may correspond to, face, or overlap the magnet 130 disposed on the first moving unit. For example, the pressing member 95 may face or overlap the magnet 130 in the third direction (e.g., the x-axis direction).

The magnet 130 may exert attractive force on the pressing member 95. For example, attractive force may act between the pressing member 95 and the magnet 130 in the third direction (the x-axis direction).

The pressing member 95 may be formed of a material that is attracted to a magnet. The pressing member 95 may be a magnetic body or may include a magnetic body. For example, the pressing member 75 may include metal that is attracted to a magnet. Alternatively, for example, the pressing member 95 may include magnetized metal. Alternatively, for example, the pressing member 95 may be a magnet. The pressing member 95 may alternatively be referred to as a "yoke," a "magnetic member," or a "metal plate."

The pressing member 95 may be disposed opposite the coil 120 with respect to the circuit board 190. Due to the attractive force between the pressing member 95 and the magnet 130, the ball member 52 may be pressed by the housing 140 and the base 210, and contact between the housing 140 and the ball member 52 and between the base 210 and the ball member 52 may be maintained.

The cover member 300, the base 210, the frame 40, the heat dissipation member 40, and the pressing member 95 may be included in the fixed unit. In addition, at least one of the components coupled to the base 210, for example, the coils 120 and 230, the position sensors 170 and 240, and the capacitors 19A and 19B, may be included in the fixed unit.

The first moving unit may be moved by an AF driving unit. The first moving unit may move in the optical-axis direction. The first moving unit may be spaced apart from the fixed unit. The ball member 52 may be disposed between the first moving unit and the fixed unit. The first moving unit may be disposed on the fixed unit. The first moving unit may be disposed within the fixed unit. The first moving unit may be disposed within the fixed unit so as to be movable in the optical-axis direction.

The first moving unit may include the housing 140. The housing 140 may alternatively be referred to as a "holder." The housing 140 may be disposed within the base 210. The housing 140 may be disposed outside the bobbin 110. The housing 140 may be disposed between the bobbin 110 and the base 210. The housing 140 may be disposed within the base 210 so as to be movable in the optical-axis direction. The housing 140 may move during AF driving. The housing 140 may not move during OIS driving.

Referring to FIGs. 9A and 9B, the housing 140 may include a cavity to accommodate the bobbin 110. The housing 140 may include an opening 401 through which light passes. For example, the housing 140 may have a box shape including the opening 401, and a lower portion thereof may be open.

The housing 140 may include an upper portion 53 (or "upper plate"). The upper portion 53 may be disposed above the bobbin 110. The upper portion 53 may be in contact with the ball member 510. A lower surface of the upper portion 53 may be in contact with the ball member 510. The opening 401 may be formed in the upper portion 53 of the housing 140.

The housing 140 may include a side portion 55 (or "side plate") disposed below the upper portion 53. The side portion 55 may be connected to the upper portion 53. The side portion 55 may extend from the upper portion 53. The side portion 55 of the housing 140 may include a first side portion 55A and a second side portion 55B, which are positioned opposite each other in the second direction (e.g., the y-axis direction), and may include a third side portion 55C and a fourth side portion 55D, which are positioned opposite each other in the third direction (e.g., the x-axis direction).

A seating portion 51 in which the magnet 130 is disposed may be formed in the side portion 55 of the housing 140. For example, the seating portion 51 may be formed in the fourth side portion 55D of the housing 140. The seating portion 51 may be a recess recessed in the side portion 55 of the housing 140.

The side portions 55A and 55C of the housing 140 may include through-holes 28A and 28B at positions corresponding to the magnet units 25A and 25B. For example, at least a portion of each of the magnet units 25A and 25B may be positioned in a corresponding one of the through-holes 28A and 28B in the side portions 55A and 55C. Portions of the bobbin 110 accommodating the magnet units 25A and 25B may be disposed in the through-holes 28A and 28B. Due to the through-holes 28A and 28B, spatial interference between the housing 140 and the bobbin may be avoided, and accordingly, a size of the lens moving apparatus 100 may be reduced.

The housing 140 may include an upper stopper 145 disposed on the upper portion 53 of the housing 140. The upper stopper 145 may be disposed on the upper portion 53 or an upper surface of the housing 140. The upper stopper 145 may limit upward movement of the housing 140. The upper stopper 145 may contact the upper plate 301 of the cover member 300 when the housing 140 moves upward in the optical-axis direction. The upper stopper 145 may include a plurality of protruding portions. The upper stopper 145 may be formed at each of four corner regions of the upper surface of the upper portion 53 of the housing 140.

The housing 140 may include a recess 39 in which at least a portion of the ball member 52 is received. The number of recesses 39 may be the same as the number of ball members 52. For example, the recess 39 may include a recess 39A in which the ball member 52A is received and a recess 39B in which the ball member 52B is received. In another embodiment, the number of recesses 39 may be one or more. The recesses 39A and 39B may be disposed on opposite sides of the magnet 130. The description of the shape of the recess 44 of the base 210 may be applied directly or analogously to the recess 39 of the housing 140.

The housing 140 may include a lower stopper 215. The lower stopper 215 may be formed on a lower end or a lower surface of the side portion 55 of the housing 140. The lower stopper 215 may limit downward movement of the housing 140. The lower stopper 215 may contact the protrusion 113 of the base 210 or the lower portion 64 of the base 210 when the housing 140 moves downward in the optical-axis direction. The lower stopper 215 may include a plurality of protruding portions. The lower stopper 215 may include four stoppers. The lower stopper 215 may be formed at each of four corner regions of the housing 140.

The housing 140 may include a coupling portion 9A to be coupled to a cover 70 to be described later. The coupling portion 9A may be disposed on the side portion 55 of the housing 140 and may include a recess in which a portion of the cover 70 is disposed or inserted. For example, the coupling portion 9A may be positioned at each of four corner regions of the side portion 55 of the housing 140.

A coupling portion 72 of the cover 70 may be coupled to the coupling portion 9A of the housing 140 using an adhesive. In another embodiment, the cover 70 may be hook-engaged with the housing 140. For example, the coupling portion 9A of the housing 140 may include a hook (not shown) or a protrusion, and the coupling portion 72 of the cover 70 may include a hole formed to be engaged with the hook.

Referring to FIG. 9C, the housing 140 may include a recess 38 in which at least a portion of the ball member 510 is received. The recess 38 may be disposed in a region of the upper portion 53 of the housing 140 corresponding to, facing, or overlapping the ball member 510 in the optical-axis direction. The recess 38 may be recessed in a lower surface of the upper portion 53 of the housing 140. For example, the housing 140 may include a protruding portion 37 protruding from the lower surface of the upper portion 53 of the housing 140, and the recess 38 may be formed in the protruding portion 37 of the housing 140. The protruding portion 37 may prevent the ball member 510 from being separated from a space between the housing 140 and the bobbin 110.

Referring to FIGs. 9A and 10A, the lens moving apparatus 100 may include a reinforcing member 150. The first moving unit may include the reinforcing member 150. The reinforcing member 150 may be disposed on the housing 140. The reinforcing member 150 may be coupled to the housing 140. The reinforcing member 150 may be disposed on the upper portion 53 of the housing 140 or coupled to the upper portion 53.

At least a portion of the reinforcing member 150 may be inserted into or embedded in the housing 140. The reinforcing member 150 may be inserted into the housing 140 through an insert injection molding process. In another embodiment, the reinforcing member 150 may be coupled to an upper portion of the housing 140 using an adhesive or a coupling member.

At least a portion of the reinforcing member 150 may be exposed from the housing 140. At least another portion of the reinforcing member 150 may be embedded in the housing 140. The reinforcing member 150 may include a metal member. The reinforcing member 150 may alternatively be referred to as a "metal member" or a "coupling portion."

The reinforcing member 150 may include at least one region 150A to 150D exposed or open from the housing 140 and coupled to a support member 220. The at least one region 150A to 150D may be exposed from both the upper surface and the lower surface of the housing 140. For example, an upper surface of the at least one region 150A to 150D may be exposed or open from the upper surface of the upper portion 53 of the housing 140. A lower surface of the at least one region 150A to 150D may be exposed or open from the lower surface of the upper portion 53 of the housing 140. The number of exposed regions of the reinforcing member 150 may be one or more. For example, the reinforcing member 150 may include four regions 150A to 150D. Each of the four regions 150A to 150D may be positioned adjacent to a corresponding one of corner regions of the upper portion 53 of the housing 140.

The reinforcing member 150 may include a hole 153 formed to be coupled to one end portion (e.g., an upper end) of the support member 220. The hole 153 may be disposed in the at least one region 150A to 150D. The support member 220 may be spaced apart from the housing 210.

The reinforcing member 150 may include a material having higher rigidity than the housing 140 formed through injection molding of a material such as resin or plastic. Accordingly, durability of the housing 140 may be improved by the reinforcing member 150. The reinforcing member 150 may be directly coupled to the support member 220 using solder or an adhesive, and may distribute stress or force applied to the support member 220 supporting a high-weight lens.

The lens moving apparatus 100 may include a pressing member 31 to apply pressing force to the ball member 510. The first moving unit may include the pressing member 31. The pressing member 31 may allow the ball member 510 to be in close contact with the first moving unit and the second moving unit. For example, the pressing member 31 may allow the ball member 510 to be in close contact with the bobbin 110 and the housing 210. In addition, the pressing member 31 may pull the second moving unit (e.g., the bobbin 110) toward the first moving unit (e.g., the housing 140). The pressing member 31 may alternatively be referred to as a "contacting member" or an "attracting member."

The pressing member 31 may be disposed on the housing 140. The pressing member 31 may be coupled to the housing 140. At least a portion of the pressing member 31 may be embedded in or inserted into the housing 140. At least a portion of the pressing member 31 may be disposed so as not to be visible from the outside of the housing 140.

The pressing member 31 may be disposed on the upper portion 53 of the housing 140. The pressing member 31 may be coupled to the upper portion 53 of the housing 140. The pressing member 31 may be embedded in or inserted into the upper portion 53 of the housing 140.

The pressing member 31 may be formed of a material that is attracted to a magnet. The pressing member 31 may be a magnetic body or may include a magnetic body. For example, the pressing member 31 may include metal that is attracted to a magnet. Alternatively, for example, the pressing member 31 may include magnetized metal. Alternatively, for example, the pressing member 31 may be a magnet. The pressing member 31 may alternatively be referred to as a "yoke," a "magnetic member," or a "metal plate."

The pressing member 31 may be disposed on the magnet 25. The pressing member 31 may correspond to, face, or overlap the magnet 25 in the optical-axis direction. The pressing member 31 may pull the magnet 25 upwardly. Attractive force may act between the pressing member 31 and the magnet 25. The number of pressing members 31 may be one or more. Due to the attractive force between the pressing member 31 and the magnet 25, the ball member 510 may be maintained in a state of being in contact with the upper portion 53 of the housing 140 and the bobbin 110, and may stably support the bobbin 110.

The pressing member 31 may include a first pressing member 31A corresponding to, facing, or overlapping the first magnet unit 25A and a second pressing member 31B corresponding to, facing, or overlapping the second magnet unit 25B. For example, the first pressing member 31A may be disposed in a first region of the upper portion 53 corresponding to the first side portion 55A of the housing 140, and the second pressing member 31B may be disposed in a second region of the upper portion 53 corresponding to the third side portion 55C of the housing 140.

For example, the first pressing member 31A may be positioned between two exposed regions 150A and 150B of the reinforcing member 150. The second pressing member 31B may be positioned between two other exposed regions 150B and 150C of the reinforcing member 150.

The pressing member 31 may be disposed on the reinforcing member 150. The pressing member 31 may face or overlap at least a portion of the reinforcing member 150 in the optical-axis direction. In another embodiment, the pressing member 31 may be disposed below the reinforcing member 150.

The pressing member 31 may be in contact with the reinforcing member 150. In another embodiment, the pressing member 31 may be spaced apart from the reinforcing member 150. The pressing member 31 may be formed as a member separate from the reinforcing member 150. In another embodiment, the pressing member 31 may be omitted. When the pressing member 31 is omitted, the pressing force applied to the ball member 510 may be generated through the support member 220 and an elastic member 160.

The reinforcing member 150 and the pressing member 31 have been described as components separate from the housing 140. However, in another embodiment, at least one of the reinforcing member 150 or the pressing member 31 may be described as part of the configuration of the housing 140, and the housing 140 may include at least one of the reinforcing member 150 or the pressing member 31.

The lens moving apparatus 100 may include a ball member 52 disposed between the base 210 and the housing 140. The ball member 52 may be a "ball for AF." The ball member 52 may overlap the upper plate 301 of the cover member 300 in the optical-axis direction. The ball member 52 may be disposed between the base 110 and the housing 210 in a direction perpendicular to the optical axis. The ball member 52 may be in contact with the base 210 and the housing 140.

The ball member 52 may guide movement of the housing 140 in the optical-axis direction (the z-axis direction) with respect to the base 210. The ball member 52 may be supported by the base 210 and may be pressed inward from the housing 140. Accordingly, the ball member 52 may be maintained in a state of being in contact with the base 210 and the housing 140. A lubricant may be applied to the ball member 52. The ball member 52 may be formed of metal. Alternatively, the ball member 52 may be formed through injection molding. The number of ball members 52 may be one or two or more. For example, a plurality of ball members 52A and 52B may be disposed between one side portion (e.g., 65D) of the base 210 and one side portion (e.g., 55D) of the housing 140. For example, two ball members 52A and 52B may be disposed on opposite sides of the magnet 130. In another embodiment, the ball member 52 may be disposed on each of different side portions of the base or different side portions of the housing.

The ball member 52 may include a plurality of balls B1 to B3. The plurality of balls B1 to B3 may be disposed or arranged in the optical-axis direction. Diameters of the plurality of balls may be the same. However, in another embodiment, at least one of the plurality of balls may have a different diameter. In another embodiment, the number of balls included in the ball member 52 may be one or two or more. The ball member 52 may serve to reduce friction with the housing 140 and the base 210 so that the housing 140 smoothly moves in the optical-axis direction.

The second moving unit of the lens moving apparatus 100 may move in a direction perpendicular to the optical axis. The second moving unit may be disposed on the first moving unit. The second moving unit may be disposed inside the first moving unit. The second moving unit may be disposed inside the fixed unit. The second moving unit may be disposed inside the first moving unit so as to be movable in a direction perpendicular to the optical axis. The second moving unit may be disposed inside the fixed unit so as to be movable in a direction perpendicular to the optical axis.

The lens moving apparatus 100 may include a bobbin 110. The second moving unit may include the bobbin 110. The second moving unit may include components (e.g., the magnet 25 and a yoke 35) coupled to the bobbin 110.

The bobbin 110 may alternatively be referred to as a "lens holder" or a "lens carrier." The bobbin 110 may be disposed in the housing 210. The bobbin 110 may be disposed in the base 210. The bobbin 110 may be disposed in the cover member 300. The bobbin 110 may be disposed to be movable in a direction perpendicular to the optical axis. The bobbin 110 may be disposed in the housing 140 so as to be movable in a direction perpendicular to the optical axis. The bobbin 110 may be disposed in the base 210 so as to be movable in a direction perpendicular to the optical axis. The bobbin 110 may be disposed in the cover member 300 so as to be movable in a direction perpendicular to the optical axis.

The bobbin 110 may include an opening 101 to be coupled to the lens module 400. The opening 101 may be a hole or a hollow portion formed through the bobbin 110 in the optical-axis direction.

The bobbin 110 may include side portions 110A to 110D corresponding to, facing, or overlapping the side portions 55A to 55D of the housing 140 (or the side portions 65A to 65D of the base 210).

The bobbin 110 may include a seating portion 112 in which the magnet 25 is disposed or received. The seating portion 25 may be a recess. The seating portion 25 may be a recess recessed in an outer side surface of the bobbin 110.

For example, the bobbin 110 may include a first seating portion in which the first magnet unit 25A is disposed and a second seating portion 112B in which the second magnet unit 25B is disposed. The first seating portion 112A may be disposed on the side portion 110A of the bobbin 110, and the second seating portion 112B may be disposed on the third side portion 110C of the bobbin 110.

The bobbin 110 may include a protruding portion 310 protruding from a side surface (or an outer side surface) thereof. For example, the protruding portion 310 may be disposed in a corner region or at a corner portion of the bobbin 110. When viewed in the optical-axis direction or from above, the protruding portion 310 may have a polygonal shape (e.g., a quadrangular shape) or a circular shape. A plurality of protruding portions 310 may be provided. For example, the bobbin 110 may include four protruding portions 310 disposed at four corners thereof. The protruding portions 310 may be positioned below an upper surface of the bobbin 110. The protruding portions 310 may be positioned above a lower surface of the bobbin 110. The protruding portions 310 may be positioned to be spaced apart from the upper surface and the lower surface of the bobbin 110.

The protruding portion 310 may include a hole 311 through which at least a portion of the support member 220 passes. The hole 311 may be a through-hole formed through the protruding portion 310 in the optical-axis direction. For example, the number of holes 311 may be the same as the number of support members 220 disposed at respective corner portions of the bobbin 110. For example, two holes spaced apart from each other may be formed in the protruding portion 310. In another embodiment, the protruding portion 310 may include one hole.

The lens moving apparatus 110 may include a damper (not shown) disposed between the protruding portion 310 of the bobbin 110 and the support member 220. The damper may be in contact with or attached to the protruding portion 310 and the support member 220. The damper may be formed of a damping material such as silicone. The damper may absorb or alleviate vibration of the bobbin 110 during OIS driving and may suppress oscillation of the bobbin 110.

The lens moving apparatus 100 may include a reinforcing member 320 disposed on the bobbin 110. The reinforcing member 320 may be coupled to the bobbin 110. At least a portion of the reinforcing member 320 may be inserted into or embedded in the bobbin 110. The reinforcing member 320 may be inserted into the bobbin 110 through an insert injection molding process. In another embodiment, the reinforcing member 320 may be coupled to an outer circumferential surface of the bobbin 110 using an adhesive or a coupling member.

At least a portion of the reinforcing member 320 may be exposed from the bobbin 110. At least another portion of the reinforcing member 320 may be embedded in the bobbin 110. The reinforcing member 320 may include a metal member. The reinforcing member 320 may alternatively be referred to as a "metal member," a "support portion," or a "coupling portion."

The reinforcing member 320 may include at least one region 32A to 32D exposed or open from the bobbin 110 and supporting the ball member 520. The at least one region 32A to 32D may be exposed from the upper surface of the bobbin 110. For example, an upper surface of the at least one region 32A to 32D may be exposed or open from the upper surface of the bobbin 110. The number of exposed regions of the reinforcing member 320 may be one or more. For example, the reinforcing member 320 may include four regions 32A to 32D. The at least one region may be disposed in a corner region of the bobbin 110.

For example, the at least one region 32A to 32D may be positioned below the upper surface of the bobbin 110. The at least one region 32A to 32D may have a step with respect to the upper surface of the bobbin 110 in the optical-axis direction.

The lens moving apparatus 100 may include a ball member 510. The ball member 510 may be disposed between the first moving unit and the second moving unit. The ball member 510 may be disposed between the housing 140 and the bobbin 110. The ball member 510 may be disposed between the upper portion 53 of the housing 140 and the bobbin 110. At least a portion of the ball member 510 may be disposed in the recess 38 of the housing 140. A lubricant, for example, grease, may be applied to the ball member 510. The ball member 510 may be formed of metal. Alternatively, the ball member 510 may be formed through injection molding of a material such as resin or plastic.

The ball member 510 may be disposed below the reinforcing member 150 exposed from a bottom of the recess 38. At least a portion of the ball member 510 may be in contact with the reinforcing member 150.

The ball member 510 may be disposed on the reinforcing member 320. The ball member 510 may be disposed in the at least one region 32A to 32D of the reinforcing member 320. The ball member 510 may be in contact with the at least one region 32A to 32D.

The ball member 510 may be disposed between the recess 38 of the housing 140 and the reinforcing member 320. The ball member 510 may be disposed between at least a portion of the reinforcing member 150 and at least a portion of the reinforcing member 320. The ball member 510 may be disposed between a lower surface of at least a portion of the reinforcing member 150 and an upper surface of at least a portion of the reinforcing member 320.

The ball member 510 may be disposed to roll on an upper surface of the at least one region 32A to 32D. The ball member 510 may be disposed to roll on a lower surface of at least a portion of the reinforcing member 150.

Flatness of a surface on which the ball member 510 rolls may be easily controlled by the reinforcing member 150 and the reinforcing member 320. In addition, the reinforcing members 150 and 320 may prevent the occurrence of damage or denting in the ball member 510 and/or the housing 140 and/or the bobbin 110 due to external impact.

The ball member 510 may guide movement of the bobbin 110 in the x-axis direction or the y-axis direction. The ball member 510 may be formed as an all-in-one type in which an x-axis ball and a y-axis ball are not distinguished and are integrated into a single ball. When the ball member 510 is formed as an all-in-one type, crosstalk in which x-axis driving force and y-axis driving force affect each other may be problematic. In the embodiment, crosstalk may be minimized through the support member 220. The ball member 510 may be disposed between the housing 140 and the bobbin 110 in the optical-axis direction. The ball member 510 may connect the housing 140 to the bobbin 110. The ball member 510 may be supported by the upper portion 53 of the housing 140 and may be pressed from below by the bobbin 110. Accordingly, the ball member 510 may be maintained in a state of being in contact with the upper portion 53 of the housing 140 and the bobbin 110.

The ball member 510 may be disposed on the upper surface of the bobbin 110. The ball member 510 may be disposed on the bobbin 110. The ball member 510 may be disposed in a corner region of the upper surface of the bobbin 110. The ball member 510 may be disposed in each of four corner regions of the upper surface of the bobbin 110. The ball member 510 may be disposed opposite the image sensor 810 with respect to the bobbin 110. The ball member 510 may include a plurality of balls. The plurality of balls may be disposed on a virtual plane perpendicular to the optical axis. The ball member 510 may include four balls. The four balls may be disposed to correspond to the four corner regions of the upper surface of the bobbin 110. The balls of the ball member 510 may be respectively disposed in the four regions 32A to 32D of the reinforcing member 320.

In another embodiment, the reinforcing member 320 may be omitted. The reinforcing member 320 may serve to prevent damage to the bobbin 110 caused by impact, and flatness of a surface on which the ball member 510 rolls may be easily controlled by the reinforcing member 320.

The reinforcing member 320 has been described as a component separate from the bobbin 110. However, in another embodiment, the reinforcing member 320 may be described as part of the configuration of the bobbin 110, and the bobbin 110 may include the reinforcing member 320.

The bobbin 110 may include a lateral stopper 312. The lateral stopper 312 may be formed on a side surface (or an outer side surface) of the bobbin 110. The lateral stopper 312 may protrude from the side surface (or the outer side surface) of the bobbin 110. The lateral stopper 312 may limit lateral movement of the bobbin 110. The lateral stopper 312 may contact the housing 140 when the bobbin 110 moves in a direction perpendicular to the optical axis. A plurality of lateral stoppers 312 may be provided. The lateral stopper 312 may be disposed on at least one of the side portions 110A to 110D of the bobbin 110.

The lens moving apparatus 100 may include a support member 220. The support member 220 may connect the first moving unit to the second moving unit. The support member 220 may support the bobbin 110 with respect to the housing 140. The support member 220 may be an elastic member. For example, the support member 220 may be a wire, a suspension wire, a leaf spring, or a coil spring. The support member 220 may be formed of an electrically conductive material. The support member 220 may be formed of metal. The support member 220 may movably support the bobbin 310 with respect to the housing 140.

The support member 220 may be coupled to the reinforcing member 150. The support member 220 may be coupled to the elastic member 160 to be described later. One end (e.g., an upper end) of the support member 220 may be coupled to the reinforcing member 150, and the other end (e.g., a lower end) of the support member may be coupled to the elastic member 160.

Using solder or a conductive adhesive, one end of the support member 220 may be coupled to the reinforcing member 150, and the other end of the support member 220 may be coupled to the elastic member 160. One end of the support member 220 may pass through or be inserted into the hole 153 in the reinforcing member 150. The other end of the support member 220 may pass through or be inserted into a hole in the second coupling portion 162 of the elastic member 160.

The support member 220 may be disposed to extend in a direction parallel to the optical axis. From the perspective of OIS driving, the housing 140 may correspond to the fixed unit, and the bobbin 110 may correspond to the moving unit. With respect to an upper end of the support member 220 coupled to the fixed unit, a lower end of the support member 220 coupled to the moving unit may move in a direction perpendicular to the optical axis. In addition, when driving force is removed, the lower end of the support member 220 may return to a position corresponding to the upper end of the support member 220 in the optical-axis direction.

The support member 220 may be disposed in a corner region of the housing 140 or in a corner region of the upper portion 53 of the housing 140. The support member 220 may include a plurality of wires. The plurality of wires may be disposed in corner regions of the housing 140 or in corner regions of the upper portion 53 of the housing 140.

Two wires may be disposed in one corner region of the housing 140. However, in another embodiment, one wire may be disposed in one corner region of the housing 140. For example, one wire or two wires may be disposed in each of four corner regions of the housing 140. In another embodiment, three or more wires may be disposed in one corner region of the housing 140. The support member 220 may be disposed on opposite sides of the first magnet unit 25A. For example, the first magnet unit 25A may overlap the support member 220 in the third direction (e.g., the x-axis direction). In addition, the support member 220 may be disposed on opposite sides of the second magnet unit 25B. The second magnet unit 25B may overlap the support member 220 in the second direction (e.g., the y-axis direction).

The lens moving apparatus 100 may include an elastic member 160 coupled to the bobbin 110. The elastic member 160 may connect the bobbin 110 to the support member 220. The elastic member 160 may be spaced apart from the fixed unit. The elastic member 160 may be spaced apart from the housing 140. The elastic member 160 may be spaced apart from the base 210. The elastic member 160 may be spaced apart from the circuit board 190. The elastic member 160 may be disposed in a direction perpendicular to the optical axis. The elastic member 160 may be disposed in a direction intersecting the support member 220. The elastic member 160 may be electrically conductive. The elastic member 160 may include metal. The elastic member 160 may include a leaf spring. In another embodiment, the elastic member 160 may be a wire.

The elastic member 160 may be disposed below the bobbin 110. The elastic member 160 may be coupled to a lower portion, a lower end, or a lower surface of the bobbin 110. The elastic member 160 may include a first coupling portion 161 coupled to the bobbin 110. For example, the first coupling portion 161 may include a ring-shaped body surrounding the opening 101 of the bobbin 110. In another embodiment, the first coupling portion 161 may include a plurality of portions spaced apart from each other. The first coupling portion 161 may be coupled to the lower portion, the lower end, or the lower surface of the bobbin 110. The first coupling portion 161 may include an extension portion 161A extending from the body. The first coupling portion 161 may include four extension portions 161A extending to respective corner regions of the bobbin 110.

The elastic member 160 may include a second coupling portion 162 coupled to the support member 220. The elastic member 160 may include a connection portion 163 connecting the first coupling portion 161 to the second coupling portion 162. The connection portion 163 may be an elastic portion, an extension portion, or a leg portion. The connection portion 163 may be elastic. The connection portion 163 may include a bent portion bent or curved at least once. The second coupling portion 162 may include a hole through which the support member 220 passes. The connection portion 163 may connect the extension portion 161A of the first coupling portion 161 to the second coupling portion 162. The number of connection portions disposed in one corner region of the bobbin 110 may be the same as the number of support members 220. For example, two connection portions may be connected to one extension portion 161A. The second coupling portion 162 may be spaced apart from the bobbin 110, and at least a portion of the connection portion 163 may be spaced apart from the bobbin 110.

The lens moving apparatus 100 may include a cover 70. The cover 70 may be disposed below the housing 140. The cover 70 may be disposed below the bobbin 110. The cover 70 may be coupled to the housing 140. The cover 70 may serve as an AF stopper. The cover 70 may be coupled to the side portion 55 of the housing 140. The cover 70 may be coupled to the coupling portion 9A formed on the side portion 55 of the housing 140. The cover 70 may be fixed to the housing 210. The cover 70 may be disposed between the bobbin 110 and the base 210 in the optical-axis direction. The cover 70 may prevent the bobbin 110 from being separated from the housing 140 or falling downward from the housing 140 due to impact. The cover 70 may alternatively be referred to as a "retainer," a "lower cover," a "protection member," or a "separation prevention member."

Referring to FIG. 9A, the cover 70 may include a body 71 and a coupling portion 72 extending from the body 71. The body 71 may be disposed below the housing 140. The body 71 may be disposed below the bobbin 110. The body 71 may have a plate shape. The cover 70 may include an opening 73 formed in the body 71. The opening 73 may correspond to, face, or overlap the opening 101 of the bobbin 110. The opening 73 may be a through-hole or a hollow portion formed through the body 71.

The coupling portion 72 may extend from the body 71 toward the housing 140 and may be coupled to the housing 140. The coupling portion 72 may be coupled to the coupling portion 9A of the housing 140. The coupling portion 72 of the cover 70 and the coupling portion 9A of the housing 140 may be coupled using an adhesive or may be hook-engaged.

For OIS driving, the bobbin 110 and the cover 70 may be spaced apart from each other in the optical-axis direction. When external impact is applied thereto, the bobbin 110 may move in the optical-axis direction within a spacing distance between the bobbin 110 and the cover 70. A moving distance of the bobbin 110 in a downward direction may be limited by the cover 70. Accordingly, excessive deformation of the elastic member 160 coupled to the bobbin 110 may be prevented. The cover 70 may prevent deformation of the elastic member 160. Deformation of the elastic member 160 may be controlled to be equal to or less than yield stress by the cover 70.

The lens moving apparatus 100 may include a "driving unit." The driving unit may move the moving unit. The driving unit may move the moving unit with respect to the fixed unit.

The driving unit may include a first driving unit configured to move the first moving unit. The first driving unit may move the first moving unit in the optical-axis direction. The first driving unit may include an AF driving unit. The lens module 400 may move together with the first moving unit and the second moving unit.

The driving unit may include a second driving unit configured to move the second moving unit. The second driving unit may move the second moving unit in a direction perpendicular to the optical axis. The second driving unit may include an OIS driving unit. The driving unit may include a coil and a magnet.

The first driving unit may include a coil 120 disposed on the fixed unit. The first driving unit may include a magnet 130 disposed on the first moving unit (e.g., the housing 140). The coil 120 may be disposed on the base 210. In another embodiment, the magnet 130 may be disposed on the fixed unit, and the coil 120 may be disposed on the housing 140.

The magnet 130 may be disposed on the side portion 55 of the housing 210. For example, the magnet 130 may be disposed on one side portion (e.g., 55D) of the housing 140. The magnet 130 may be coupled or fixed to the housing 140. The magnet 130 may be disposed between the side plate 302 of the cover member 300 and the side portion 55 of the housing 140. For example, the magnet 130 may be disposed in the seating portion 51 of the housing 140.

The magnet 130 may be a quadrupole magnet including two N poles and two S poles. The magnet 130 may include a first magnet portion including an N pole and an S pole, a second magnet portion including an S pole and an N pole, and a partition wall positioned between the first magnet portion and the second magnet portion. The first magnet portion and the second magnet portion may be positioned opposite each other in the optical-axis direction with respect to the partition wall. The first magnet portion and the second magnet portion may be disposed such that opposite polarities face each other in the optical-axis direction. The partition wall may be a neutral zone.

For example, an outer surface of an upper portion of the magnet 130 may be an N pole (or an S pole), and an inner surface of the upper portion of the magnet 130 may be an S pole (or an N pole). An outer surface of a lower portion of the magnet 130 may be an S pole (or an N pole), and an inner surface of the lower portion of the magnet 130 may be an N pole (or an S pole).

In another embodiment, the magnet 130 may be a dipole magnet including one N pole and one S pole. For example, the N pole and the S pole of the dipole magnet 130 may be disposed in the optical-axis direction.

The lens moving apparatus 100 may include a yoke 15A. The yoke 15A may be included in the first driving unit. The yoke 15A may be disposed on the first moving unit (e.g., the housing 140). The yoke 15A may be coupled to the housing 140. The yoke 15A may be disposed between the magnet 130 and the housing 140. The yoke 15A may be positioned opposite the coil 120 with respect to the magnet 130. For example, the yoke 15A may be disposed in the seating portion 51 of the housing 140. For example, at least a portion of the yoke 15A may be embedded in or inserted into the housing 140. At least a portion of the yoke 15A may be exposed from the housing 140. In another embodiment, the yoke 15A may be attached to the magnet 130 or may be coupled or attached to the housing 140 using an adhesive.

The yoke 15A may concentrate magnetic force of the magnet 130 toward the coil 120. The yoke 15A may minimize leakage of magnetic flux of the magnet 130 in a direction opposite the coil 120. The yoke 15A may increase electromagnetic force between the magnet 130 and the coil 120, thereby enhancing AF driving force.

The coil 120 may be disposed on the fixed unit. The coil 120 may be disposed on the base 210. The coil 120 may be disposed or mounted on the circuit board 190. The coil 120 may be disposed or mounted on the third board 193 of the circuit board 190. The coil 120 may be electrically connected to the circuit board 190.

The coil 120 may have a ring shape and may be wound about a first axis, and the coil 120 may have a hollow portion. The first axis may be a straight line perpendicular to the optical axis and parallel to the third direction. Alternatively, the first axis may be perpendicular to the side portion 65D of the base 210 or the third board 193. Alternatively, the first axis may be perpendicular to the side portion 65C of the base 210 or the second board 192.

A driving signal for AF driving may be supplied to the coil 120. The coil 120 may move the first moving unit (e.g., the housing 140) in the optical-axis direction through interaction with the magnet 130. The coil 120 may generate electromagnetic force through electromagnetic interaction with the magnet 130. The coil 120 may be disposed at a position corresponding to, facing, or overlapping the magnet 130. The coil 120 may face or overlap the magnet 130 in a direction perpendicular to the optical axis (e.g., in the third direction).

The second driving unit may include the coil 230 and the magnet 25.

The magnet 25 may be disposed on the moving unit. The moving unit may include the magnet 25. The magnet 25 may be disposed on the bobbin 110. The magnet 25 may be coupled or fixed to the bobbin 110. The magnet 25 may be disposed on the side portion of the bobbin 110. For example, the magnet 25 may be disposed in the seating portion 112 of the bobbin 110. The magnet 25 may be disposed in the housing 210. The magnet 25 may be disposed between the bobbin 110 and the side plate 302 of the cover member 300.

The magnet 250 may include a first magnet unit 25A and a second magnet unit 25B. The first magnet unit 25A and the second magnet unit 25B may be disposed on different side portions (e.g., 110A and 110C) of the bobbin 110. For example, the first magnet unit 25A and the second magnet unit 25B may be disposed on adjacent different side portions (e.g., 110A and 110C) of the bobbin 110.

For example, a line connecting the optical axis to the first magnet unit 25A and a line connecting the optical axis to the second magnet unit 25B may intersect each other. For example, the first magnet unit 25A and the optical axis may face each other in the second direction, and the second magnet unit 25B and the optical axis may face each other in the third direction.

The second magnet unit 25B may be positioned opposite the magnet 130 with respect to the optical axis. For example, a driving magnet may not be disposed opposite the first magnet unit 25B with respect to the optical axis.

Each of the first and second magnet units 25A and 25B may be a dipole magnet including one N pole and one S pole. An outer surface of each of the magnet units 25A and 25B facing the coil 230 may be an N pole (or an S pole), and an inner surface opposite the outer surface may be an S pole (or an N pole). For example, the N pole and the S pole of each of the magnet units 25A and 25B may be disposed to face each other in a direction perpendicular to the optical axis. In another embodiment, the N pole and the S pole of each of the magnet units 25A and 25B may be disposed to face each other in the optical-axis direction.

In another embodiment, each of the first and second magnet units 25A and 25B may be a quadrupole magnet having two N poles and two S poles. For example, each of the first and second magnet units 25A and 25B may include a first magnet portion including an N pole and an S pole, a second magnet portion including an S pole and an N pole, and a partition wall positioned between the first magnet portion and the second magnet portion. The first magnet portion and the second magnet portion may be positioned opposite each other in a direction perpendicular to the optical axis with respect to the partition wall. The first magnet portion and the second magnet portion may be disposed such that opposite polarities face each other in a direction perpendicular to the optical axis. The partition wall may be a neutral zone.

The coil 230 may be disposed on the fixed unit. The coil 230 may be disposed on the base 210. The coil 230 may be disposed or mounted on the circuit board 190. The first coil unit 230A of the coil 230 may be disposed or mounted on the first board 191 of the circuit board 190. The second coil unit 230B may be disposed or mounted on the second board 192 of the circuit board 190. The coil 230 may be electrically connected to the circuit board 190.

The first coil unit 230A may have a ring shape and may be wound about a second axis. The first coil unit 230A may have a hollow portion. The second axis may be a straight line perpendicular to the optical axis and parallel to the second direction. Alternatively, the second axis may be perpendicular to the side portion 65A of the base 210 or the first board 191. The second coil unit 230B may have a ring shape and may be wound about the first axis. The second coil unit 230B may have a hollow portion.

The first coil unit 230A may correspond to, face, or overlap the first magnet unit 25A. The first coil unit 230A may face or overlap the first magnet unit 25A in a direction perpendicular to the optical axis (e.g., in the second direction).

The second coil unit 230B may correspond to, face, or overlap the second magnet unit 25B. The second coil unit 230B may face or overlap the second magnet unit 25B in a direction perpendicular to the optical axis (e.g., in the third direction).

A first driving signal for OIS driving may be supplied to the first coil unit 230A, and a second driving signal for OIS driving may be supplied to the second coil unit 230B.

The coil 230 may move the second moving unit (e.g., the bobbin 110) in a direction perpendicular to the optical axis through interaction with the magnet 25. The coil 230 may generate electromagnetic force through electromagnetic interaction with the magnet 25.

For example, the second moving unit (e.g., the bobbin 110) may move in the third direction (the x-axis direction) through interaction between the first coil unit 230A and the first magnet unit 25A. For example, the second moving unit (e.g., the bobbin 110) may move in the second direction through interaction between the second coil unit 230B and the second magnet unit 25B.

The lens moving apparatus 100 may include a yoke 35. The second driving unit may include the yoke 35. The yoke 35 may be disposed on the second moving unit (e.g., the bobbin 110). The yoke 35 may be coupled to the bobbin 110.

The yoke 35 may be disposed between the bobbin 110 and the magnet 25. The yoke 35 may be positioned opposite the coil 230 with respect to the magnet 25. The yoke 35 may be disposed in the seating portion 112 of the bobbin 110. For example, at least a portion of the yoke 35 may be embedded in or inserted into the bobbin 110. At least a portion of the yoke 35 may be exposed from the bobbin 110. In another embodiment, the yoke 35 may be attached to the magnet 25 or may be coupled or attached to the bobbin 110 using an adhesive.

The yoke 35 may include a first yoke 35A corresponding to, facing, or overlapping the first magnet unit 25A and a second yoke 35B corresponding to, facing, or overlapping the second magnet unit 25B. At least a portion of the first yoke 35A may be disposed in the first seating portion 112A of the bobbin 110, and at least a portion of the second yoke 35B may be disposed in the second seating portion 112B of the bobbin 110.

The yoke 35 may concentrate magnetic force of the magnet 25 toward the coil 230. The yoke 35 may minimize leakage of magnetic flux of the magnet 330 in a direction opposite the coil 230. The yoke 315 may increase electromagnetic force between the magnet 35 and the coil 230, thereby enhancing OIS driving force.

The lens moving apparatus 100 may include a position sensor 170. The position sensor 170 may be included in the driving unit. The position sensor 170 may detect displacement or a position of the first moving unit in the optical-axis direction. The position sensor 170 may detect magnetic force of the magnet 130. The position sensor 170 may be disposed to correspond to, face, or overlap the magnet 130. The position sensor 170 may be disposed on the fixed unit, for example, the base 210. The position sensor 170 may be disposed or mounted on the circuit board 190. The position sensor 170 may be electrically connected to the circuit board 190. The position sensor 170 may be disposed or mounted on the third board 193. The position sensor 170 may overlap at least a portion of the magnet 130 in the third direction. The position sensor 170 may be disposed between the side plate 302 of the cover member 300 and the magnet 130.

The position sensor 170 may be disposed in the hollow portion of the coil 120. In another embodiment, the position sensor 170 may be disposed outside the hollow portion of the coil 120.

The position sensor 170 may be implemented as a Hall sensor alone. For example, the Hall sensor may be a magnetic sensing element for position detection. The position sensor 170 implemented as a Hall sensor may include two input terminals to which a power or driving signal is input and two output terminals outputting an output signal. A controller 830 or 780 may adjust or control a driving signal of the coil 120 using the output signal of the position sensor 170, and accordingly autofocus feedback control may be performed.

In another embodiment, the position sensor 170 may be a driver IC including a Hall sensor. The position sensor 170 in the form of a driver IC may receive power signals VDD and VSS from the controller 830 or 780 through data communication using a protocol, for example, I2C communication, and may transmit and receive a clock signal SCL and a data signal SDA to and from the controller 830 or 780. In this case, the power signal VSS may be a ground voltage or 0 V, and the power signal VDD may be a preset voltage for driving the driver IC and may be a directcurrent voltage and/or an alternating-current voltage. The position sensor 170 in the form of a driver IC may include first to sixth terminals. The first and second terminals of the position sensor 170 may be terminals for receiving the power signal, the third terminal may be a terminal for transmitting and receiving the clock signal, and the fourth terminal may be a terminal for transmitting and receiving the data signal. In addition, the fifth and sixth terminals of the position sensor 170 may be terminals for supplying a driving signal to the coil 120. The position sensor 170 in the form of a driver IC may supply the driving signal to the coil 120 through the circuit board 190. The controller 830 or 780 may adjust or control the driving signal of the coil 120 using the data signal transmitted to and received from the position sensor 170, and accordingly autofocus feedback control may be performed.

The lens moving apparatus 100 may include a position sensor 240. The driving unit may include the position sensor 240. The position sensor 240 may detect displacement or a position of the second moving unit (e.g., the bobbin 110). The position sensor 240 may detect displacement of the second moving unit (e.g., the bobbin 110) in a direction perpendicular to the optical axis. The position sensor 240 may detect magnetic force of the magnet 25. The position sensor 240 may correspond to, face, or overlap the magnet 25.

The position sensor 240 may be disposed on the fixed unit, for example, the base 210. The position sensor 240 may be disposed or mounted on the circuit board 190. The position sensor 240 may be electrically connected to the circuit board 190.

The position sensor 240 may include a first sensor 240A and a second sensor 240B.

The first sensor 240A may be disposed or mounted on the first board 191. The second sensor 240B may be disposed or mounted on the second board 192.

The first sensor 240A may detect displacement of the second moving unit (e.g., the bobbin 110) in the second direction (the y-axis direction). The second sensor 240B may detect displacement of the second moving unit (e.g., the bobbin 110) in the third direction (the x-axis direction).

The first sensor 240A may detect displacement of the first magnet unit 25A. The first sensor 240A may detect magnetic force of the first magnet unit 25A. The second sensor 240B may detect displacement of the second magnet unit 25B. The second sensor 240B may detect magnetic force of the second magnet unit 25B.

The first sensor 240A may correspond to, face, or overlap the first magnet unit 25A. The second sensor 240B may correspond to, face, or overlap the second magnet unit 25B. The first sensor 240A may overlap at least a portion of the first magnet unit 25A in the second direction. The second sensor 240B may overlap at least a portion of the second magnet unit 25B in the third direction. The first sensor 240A may be disposed between the side plate 302 of the cover member 300 and the first magnet unit 25A, and the second sensor 240B may be disposed between the side plate 302 and the second magnet unit 25B.

The first sensor 240A may be disposed in the hollow portion of the first coil unit 230A, and the second sensor 240B may be disposed in the hollow portion of the first coil unit 230B. In another embodiment, the first sensor 240A and the second sensor 240B may be disposed outside the hollow portions of the coil units 230A and 230B.

Each of the first sensor 240A and the second sensor 240B may be a Hall sensor. The description of the case in which the position sensor 170 is implemented as a Hall sensor alone may be applied directly or analogously to the first sensor 240A and the second sensor 240B. The controller 830 or 780 may adjust or control a driving signal supplied to the first coil unit 230A using an output signal of the first sensor 240A, and may adjust or control a driving signal supplied to the second coil unit 230B using an output signal of the second sensor 240B. Accordingly, OIS feedback control may be performed.

The description of the case in which the position sensor 170 is implemented as a driver IC including a Hall sensor may be applied directly or analogously to the first sensor 240A and the second sensor 240B. In this case, the controller 830 or 780 may adjust or control a driving signal of the first coil unit 230A using a data signal transmitted to and received from the first sensor 240A, and may adjust or control a driving signal of the second coil unit 230B using a data signal transmitted to and received from the second sensor 240B. Accordingly, OIS feedback control may be performed.

The lens moving apparatus 100 may include capacitors 19A to 19C. In another embodiment, the lens moving apparatus 100 may include at least one of the capacitors 19A to 19C. The capacitors 19A, 19B, and 19C may be disposed or mounted on the circuit board 190. The capacitors 19A to 19C may be electrically connected to the circuit board 190. The capacitor 19A may be disposed or mounted on the first board 191, the capacitor 19B may be disposed or mounted on the second board 192, and the capacitor 19C may be disposed or mounted on the third board 193.

The capacitor 19A may be disposed in the hollow portion of the first coil unit 230A, the capacitor 19B may be disposed in the hollow portion of the second coil unit 230B, and the capacitor 19C may be disposed in the hollow portion of the coil 120. In another embodiment, the capacitors 19A to 19C may be disposed outside the hollow portion of the coil 120 and the hollow portions of the coil units 230A and 230B.

The capacitor 19A may be connected to two terminals of the first sensor 240A to which a power or driving signal is supplied. The capacitor 19B may be connected to two terminals of the second sensor 240B to which a power or driving signal is supplied. The capacitor 19C may be connected to two terminals of the position sensor 170 to which a power or driving signal is supplied.

For example, the capacitors 19A, 19B, and 19C may be connected in parallel to two terminals of each of the sensors 240A, 240B, and 170 to which a power or driving signal is supplied. The capacitors 19A to 19C may serve as a smoothing circuit removing a ripple component or a highfrequency component included in the power signal supplied to each of the sensors 240A, 240B, and 170 from outside, and accordingly a stable and constant power signal may be supplied to each of the sensors 240A, 240B, and 170.

Referring to FIG. 4A, a thickness T1 of a portion of the base 210 positioned below the side plate 302 of the cover member 300 may be greater than a thickness T2 of the sensor base 600. T1 may be a length of the portion of the base 210 in the optical-axis direction, and T2 may be a length of the sensor base 600 in the optical-axis direction. A length of the camera device 200 in the optical-axis direction may be reduced by reducing the thickness T2 of the sensor base 600. In addition, by setting T1 to be greater than T2, durability of the base 210 and the frame 60 may be improved, and deformation or breakage caused by impact may be prevented.

An AF operation of the lens moving apparatus according to the embodiment will now be described.

At an initial position in which a driving signal, for example, a driving current, is not applied to the coil 120, the first moving unit may be positioned on an upper surface of the lower portion 64 of the base 210. When the driving signal is applied to the coil 120, the magnet 30 may move upward along the optical axis due to electromagnetic interaction between the coil 120 and the magnet 130. In this case, the first moving unit, the second moving unit, and the lens module 400 may move together with the magnet 130. Accordingly, a distance between the lens module 400 and the image sensor 810 may change, so that a focus of an image formed on the image sensor 810 through the lens module 400 may be adjusted.

Meanwhile, during movement of the magnet 130, the position sensor 170 may detect intensity of a magnetic field of the magnet 130 to detect displacement or an amount of movement of the magnet 130. An output signal (or a data signal) corresponding to the displacement or the amount of movement of the magnet 130 detected by the position sensor 170 may be transmitted to the controller 830 or 780, and the controller 830 or 780 may control the driving signal applied to the coil 120 using the transmitted output signal (or data signal). Accordingly, autofocus feedback control may be performed.

Next, an optical image stabilization function of the lens moving apparatus according to the embodiment will now be described.

At an initial position in which a driving signal (e.g., a driving current) is not applied to the coil 230, the second moving unit may be disposed to be spaced apart from the first moving unit. When the driving signal is applied to at least one of the first coil unit 230A or the second coil unit 230B of the coil 230, the second moving unit (e.g., the bobbin 110 and the magnet 25) may move in a direction perpendicular to the optical axis due to interaction between the first coil unit 230A and the first magnet unit 25A and interaction between the second coil unit 230B and the second magnet unit 25B.

When the second moving unit moves, the first sensor 240A may detect intensity of a magnetic field of the first magnet unit 25A and may detect displacement or an amount of movement of the first magnet unit 25A in a direction perpendicular to the optical axis (e.g., in the y-axis direction). The second sensor 240B may detect intensity of a magnetic field of the second magnet unit 25B and may detect displacement or an amount of movement of the second magnet unit 25B in a direction perpendicular to the optical axis (e.g., in the x-axis direction).

Output signals (or data signals) corresponding to displacement or the amount of movement of the magnet units 25A and 25B detected by the first and second sensors 240A and 240B may be transmitted to the controller 830 or 780, and the controller 830 or 780 may control the driving signals applied to the first and second coil units 230A and 230B using the transmitted output signals (or data signals). Accordingly, optical image stabilization feedback control may be performed.

As the image sensor and the lens increase in size, the amount of heat generated from the image sensor may increase. In addition, increase in stroke of the first moving unit for autofocus and increase in stroke of the second moving unit for optical image stabilization may increase the amount of heat generated from the AF coil and the coil for optical image stabilization. Increase in temperature of the camera device caused by increase in temperature of the image sensor and the coils, which are heat sources, may cause demagnetization of the AF driving magnet and the OIS driving magnet, and accordingly may cause errors in AF driving and OIS driving.

In addition, increase in temperature of the camera device may cause variation in output signals of the AF position sensor and the OIS position sensor. Accordingly, accuracy and reliability of AF driving and OIS driving may deteriorate. In addition, increase in temperature of the controller may cause increase in temperature of the image sensor, resulting in image loss, noise generation, reduction in resolution, and quantitative and qualitative degradation in image quality of the image sensor.

The embodiment provides a structure capable of efficiently dissipating heat generated from the coils 120 and 230 and the image sensor 810, which are heat sources.

First, heat generated from the coils 120 and 230 may be transferred to the circuit board 190 and to the frame 60 in contact with the circuit board 190, and heat transferred to the frame 60 may be dissipated to the outside of the cover member 300 through the heat dissipation member 40. In another embodiment in which the cover member 300 does not include the hole 3 and the heat dissipation member 40 is in contact with the side plate 302 of the cover member 300, heat transferred from the frame 60 to the heat dissipation member 40 may be dissipated through the heat dissipation member 40 and the cover member 300.

Next, heat generated from the image sensor 810 may be transferred to the frame 50 of the sensor base 600 through the heat dissipation portion 805 of the circuit board 800. Heat transferred from the heat dissipation portion 805 to the frame 50 may be transferred to the frame 60 disposed on the base 210 of the lens moving apparatus 100. Heat transferred to the frame 60 may be transferred to the heat dissipation member 40, and may be dissipated to the outside of the cover member 300 through the heat dissipation member 40.

In another embodiment in which the cover member 300 does not include the hole 3 and the heat dissipation member 40 is in contact with the side plate 302 of the cover member 300, heat transferred from the frame 60 to the heat dissipation member 40 may be dissipated through the cover member 300.

In the embodiment, as described above, heat generated from the coils 120 and 230 and the image sensor 810, which are heat sources, may be efficiently dissipated, and excessive increase in temperature of the lens moving apparatus 100 and the camera device 200 may be prevented or suppressed. Accordingly, in the embodiment, image loss and quantitative and qualitative degradation in image quality of the image sensor caused by heat generated from the coils and the image sensor may occur.

In addition, in the embodiment, demagnetization of the driving magnet caused by heat generated from the coils and the image sensor may be suppressed, and deterioration in accuracy and reliability of the position sensors 170 and 240 may be prevented. Accordingly, the embodiment may improve reliability of the autofocus operation and the optical image stabilization operation.

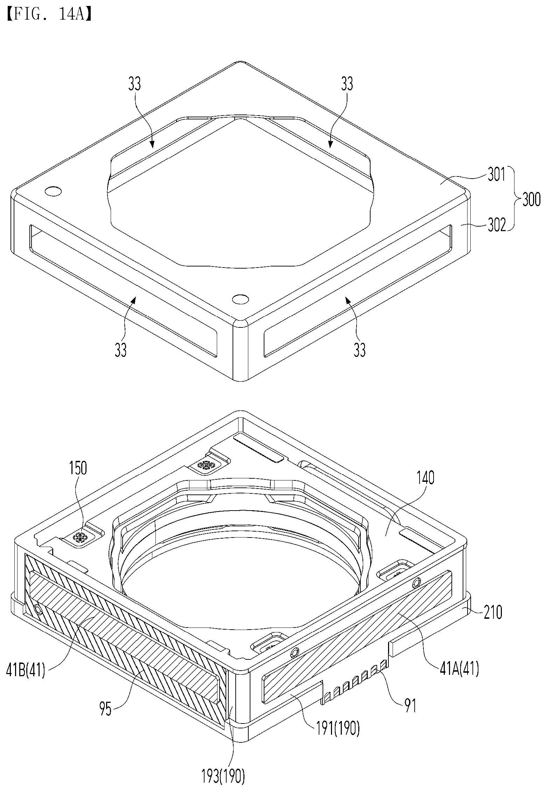

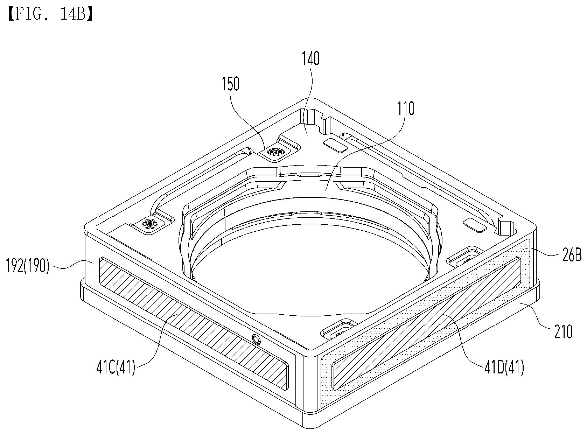

FIG. 14A is a first perspective view of a lens moving apparatus according to another embodiment, and FIG. 14B is a second perspective view of the lens moving apparatus shown in FIG. 14A. The embodiment shown in FIGs. 14A and 14B may include a heat dissipation member 41 instead of the heat dissipation member 40 included in the lens moving apparatus 100 shown in FIG. 7. That is, the heat dissipation member 41 may be a modified embodiment of the heat dissipation member 40 shown in FIG. 7.

The heat dissipation member 41 may be disposed on the circuit board 190. The heat dissipation member 41 may be connected to the circuit board 190. The heat dissipation member 41 may be in contact with the circuit board 190. The heat dissipation member 41 may be positioned opposite the coils 120 and 230 with respect to the circuit board 190. The heat dissipation member 41 may be disposed on a second surface of the circuit board 190 opposite a first surface thereof on which the coils 120 and 230 are disposed. The heat dissipation member 40 may include a plurality of heat dissipation members 41A to 41D. In another embodiment, the lens moving apparatus may include at least one of the plurality of heat dissipation members. The description of the material and function of the heat dissipation member 40 may be applied directly or analogously to the heat dissipation member 41.

The lens moving apparatus may include a heat dissipation member 41A disposed on the first board 191. The heat dissipation member 41A may be connected to or in contact with the first board 191. The heat dissipation member 41A may be positioned above the extension portion 94. The heat dissipation member 41A may be positioned above the terminal portion 91. For example, the heat dissipation member 41A may face or overlap the first coil unit 230A in a direction perpendicular to the optical axis and oriented from the optical axis toward the first coil unit 230A. At least a portion of the heat dissipation member 41A may overlap at least a portion of the first coil unit 230A in a direction in which the first magnet unit 25A and the first coil unit 230A face each other. At least a portion of the heat dissipation member 41A may overlap at least a portion of the first coil unit 230A in the second direction. At least a portion of the heat dissipation member 41A may face or overlap the first sensor 240A. At least a portion of the heat dissipation member 41A may face or overlap the capacitor 19A.

In the embodiment shown in FIG. 14A, the heat dissipation member 41A may be disposed to overlap the first coil unit 230A and may have an increased area, thereby improving heat dissipation efficiency and heat dissipation performance. In addition, since the heat dissipation member 41A overlaps the first sensor 240A, heat generated from the first sensor 230A may be effectively dissipated.

The lens moving apparatus may include a heat dissipation member 41B disposed on the second board 192. The heat dissipation member 41B may be connected to or in contact with the second board 192. The heat dissipation member 41B may face or overlap the second coil unit 230B in a direction perpendicular to the optical axis and oriented from the optical axis toward the second coil unit 230B. At least a portion of the heat dissipation member 41B may overlap at least a portion of the second coil unit 230B in a direction in which the second magnet unit 25B and the second coil unit 230B face each other. At least a portion of the heat dissipation member 41B may overlap at least a portion of the second coil unit 230B in the second direction. At least a portion of the heat dissipation member 41B may face or overlap the second sensor 240B. At least a portion of the heat dissipation member 41B may face or overlap the capacitor 19B.

In the embodiment shown in FIG. 14A, the heat dissipation member 41B may be disposed to overlap the second coil unit 230B and may have an increased area, thereby improving heat dissipation efficiency and heat dissipation performance. In addition, since the heat dissipation member 41B overlaps the second sensor 240B, heat generated from the second sensor 230B may be effectively dissipated.

The lens moving apparatus may include a heat dissipation member 41C disposed on the third board 192. The heat dissipation member 41C may be disposed on the pressing member 95. The heat dissipation member 41C may be connected to or in contact with the pressing member 95. The heat dissipation member 41C may face or overlap the coil 120 in a direction perpendicular to the optical axis and oriented from the optical axis toward the coil 120. At least a portion of the heat dissipation member 41C may overlap at least a portion of the coil 120 in a direction in which the magnet 130 and the coil 120 face each other. At least a portion of the heat dissipation member 41C may overlap at least a portion of the coil 120 in the third direction. At least a portion of the heat dissipation member 41C may face or overlap the position sensor 170. At least a portion of the heat dissipation member 41C may face or overlap the capacitor 19C. In the embodiment shown in FIG. 14A, the heat dissipation member 41C may be disposed to overlap the coil 120 and may have an increased area, thereby improving heat dissipation efficiency and heat dissipation performance. In addition, since the heat dissipation member 41C overlaps the position sensor 170, heat generated from the position sensor 170 may be effectively dissipated.

The lens moving apparatus may include a heat dissipation member 41D disposed on the base 210. The heat dissipation member 41C may be disposed on the third side portion 65C of the base 210. The heat dissipation member 41C may be disposed on the outer surface of the third side portion 65C of the base 210. The heat dissipation member 41D may be connected to or in contact with the third side portion 65C of the base 210. The heat dissipation member 41D may be disposed in or inserted into a hole 3G in the cover member 300 and may be exposed from the cover member 300.

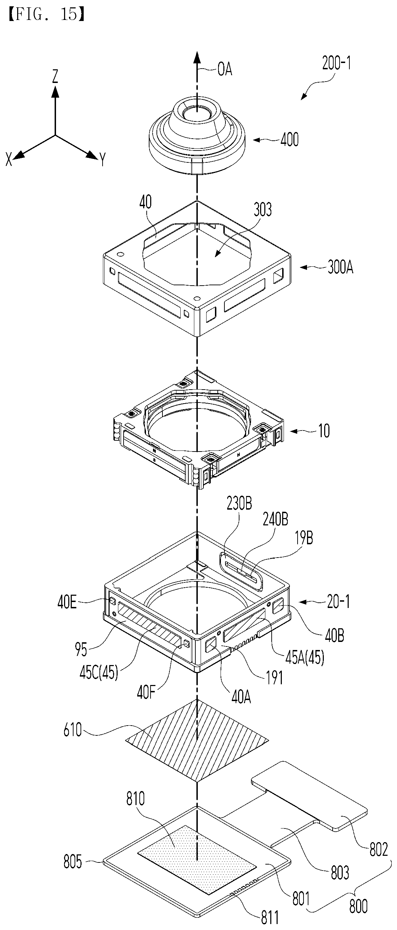

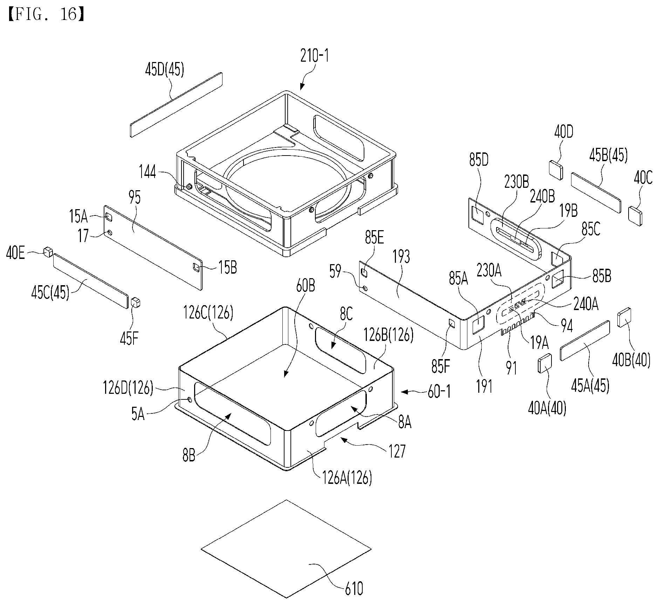

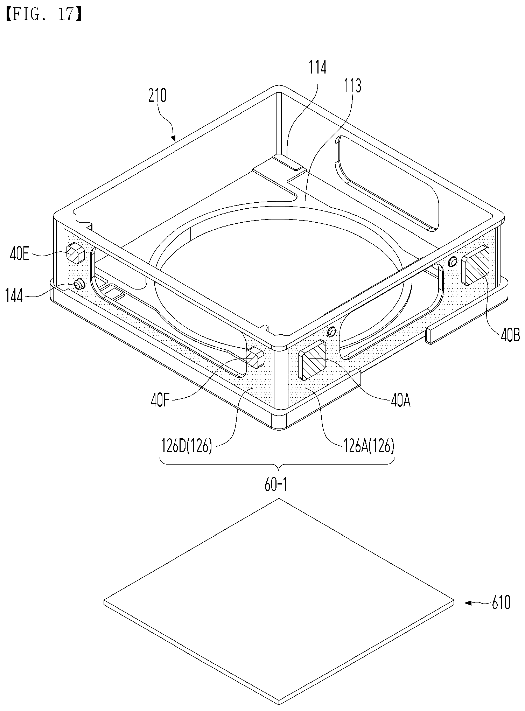

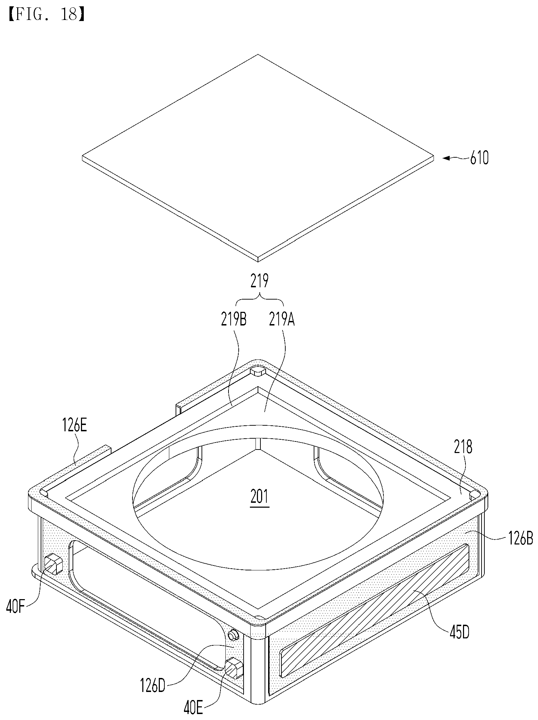

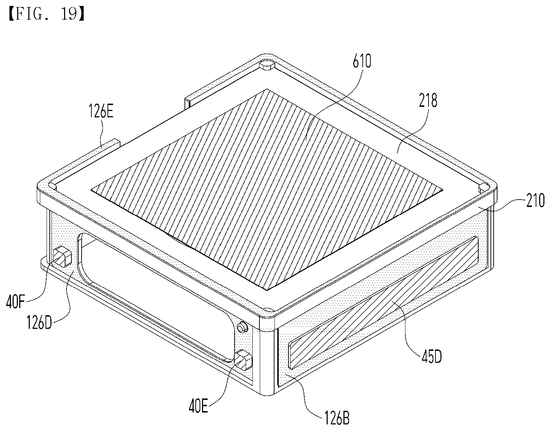

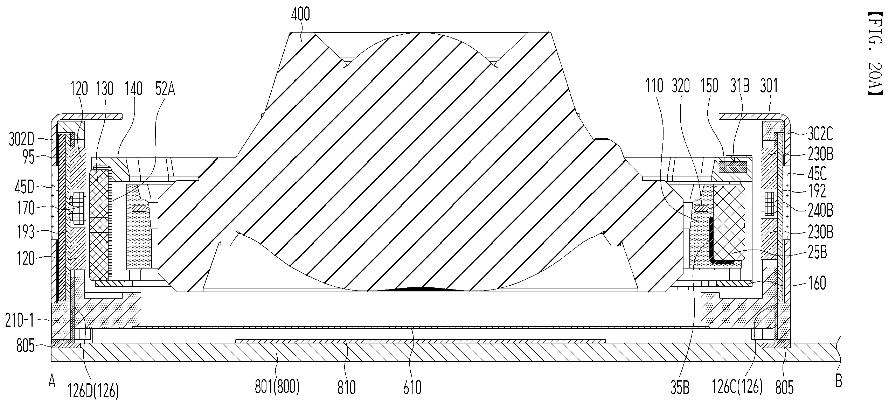

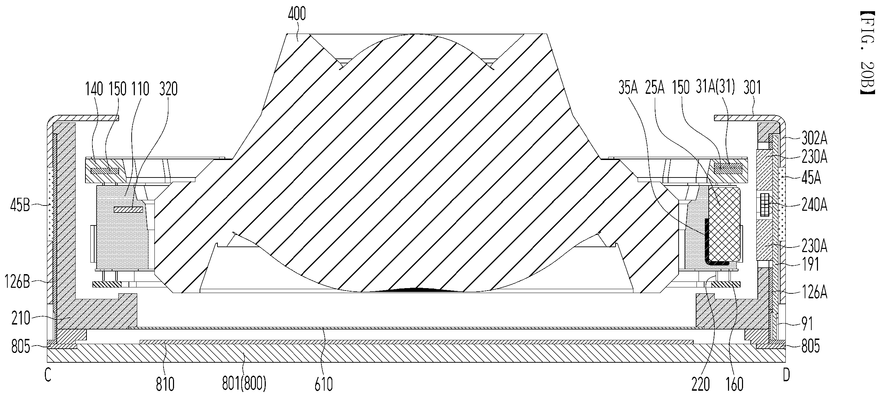

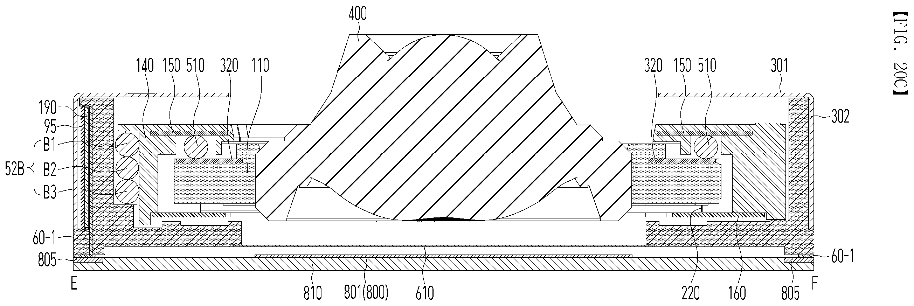

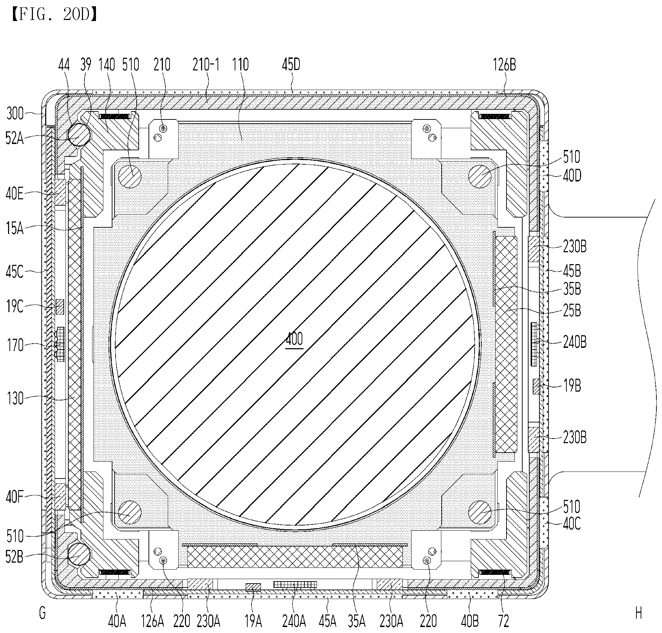

FIG. 15 is an exploded perspective view of a camera device 200-1 according to another embodiment, FIG. 16 is an exploded perspective view of a fixed unit and a filter 610 of the camera device 200-1 shown in FIG. 15, FIG. 17 is a coupled view of the fixed unit shown in FIG. 15, FIG. 18 is a bottom perspective view of the fixed unit shown in FIG. 15, FIG. 19 is a coupled view of the fixed unit and the filter 610 shown in FIG. 15, FIG. 20C is a cross-sectional view of the camera device 200-1 shown in FIG. 15 taken in direction AF in FIG. 2, FIG. 20B is a cross-sectional view of the camera device 200-1 shown in FIG. 15 taken in direction CD in FIG. 2, FIG. 20C is a cross-sectional view of the camera device 200-1 shown in FIG. 15 taken in direction EF in FIG. 2, and FIG. 20D is a cross-sectional view of the camera device 200-1 shown in FIG. 15 taken in direction GH in FIG. 2. In FIGs. 15 to 20D, the same reference numerals as those in FIGs. 1 to 14 indicate the same components, and descriptions of the same components will be omitted.

Referring to FIGs. 15 to 20D, the camera device 200-1 may include a lens module 400, a lens moving apparatus 100-1, a filter 610, a circuit board 800, and an image sensor 810. The lens moving apparatus 100-1 may include a fixed unit 20-1 and a moving unit 10.

Referring to FIG. 16, a frame 60-1 may be a modified embodiment of the frame 60 shown in FIG. 11A. The frame 60-1 may include an opening 60B. The frame 60-1 may include a side plate 126. The side plate 126 may include a plurality of side plates 126A to 126D corresponding to side portions of a base 210-1. The side plates 126A to 126D may be connected to each other. An escape portion 127 (e.g., a recess) for avoiding spatial interference with the extension portion 94 of the circuit board 190 may be formed in the first side plate 126A. In another embodiment, the side plates 126A to 126D may be spaced apart from each other. The description of the base 210 may be applied directly or analogously to the base 210-1.

The frame 60-1 may have a structure inserted into the base 210-1. In another embodiment, the frame 60-1 may be coupled to the base 210-1 using a coupling member or an adhesive. For example, the frame 60-1 may be coupled, attached, or fixed to at least one of a lower surface or a side surface of the base 210 using a coupling member or an adhesive. For example, the frame 60-1 may include a first portion disposed on or coupled to the lower surface of the base 210-1 and a second portion disposed on a side portion 65 of the base 210-1. In addition, the frame 60-1 may further include a third portion connecting the first portion to the second portion.

The camera device 200-1 may include a heat dissipation member 45 disposed on the circuit board 190. The heat dissipation member 45 may be connected to the circuit board 190. The heat dissipation member 45 may be in contact with the circuit board 190. The heat dissipation member 45 may be positioned opposite the coils 120 and 230 with respect to the circuit board 190. The heat dissipation member 45 may be disposed on a second surface of the circuit board 190 opposite a first surface thereof on which the coils 120 and 130 are disposed. The heat dissipation member 45 may include a plurality of heat dissipation members 45A to 45D. In another embodiment, the lens moving apparatus may include at least one of the plurality of heat dissipation members.

The description of the heat dissipation members 41A to 41D shown in FIGs. 14A and 14B may be applied directly or analogously to the heat dissipation members 45A to 45D shown in FIG. 16.

In another embodiment, the lens moving apparatus 200-1 may include at least one of the heat dissipation members 40 shown in FIGs. 8A and 8B instead of the heat dissipation member 45.

The description of the material and function of the heat dissipation member 40 may be applied directly or analogously to the heat dissipation member 41.

In the embodiment shown in FIGs. 15 to 20D, the sensor base 600 shown in FIG. 4A may be omitted, and the filter 610 may be disposed on the base 210 of the lens moving apparatus 100.

Referring to FIGs. 17 to 19, the frame 60-1 may include a portion 126E disposed on the lower surface of the base 210-1. The frame 60-1 may include a region 126E exposed from the lower surface of the base 210-1. The base 210-1 may include a recess 218 formed in the lower surface of the base 210-1 to avoid spatial interference with the image sensor 810. The recess 218 may be recessed in the lower surface of the sensor base 600.

The filter 610 may be connected to the base 210. The filter 610 may be coupled or attached to the base 210-1. The filter 610 may be disposed on or coupled to the lower surface of the base 210-1. The base 210-1 may include a seating portion 219 in which the filter 610 is disposed or seated. The seating portion 219 may be a recess recessed in the lower surface of the base 210. The seating portion 219 may include a bottom surface 219A and a side surface 219B. For example, the seating portion 219 may be recessed in the bottom surface of the recess 218 of the base 210-1. The seating portion 219 may be formed in the bottom surface of the recess 218 of the base 210-1. An opening 201 may be formed in the bottom surface 219A of the seating portion 219. The filter 610 may be coupled to the seating portion of the base 210-1 using an adhesive.

In the embodiment shown in FIGs. 15 to 20D, since the sensor base 600 shown in FIG. 4A is omitted, the base 210-1 may be disposed on the circuit board 800. The base 210-1 may be connected to the circuit board 800. The frame 60-1 may be connected to the circuit board 800. The frame 60-1 may be in contact with the circuit board 800. The exposed region 126E of the frame 60-1 may be in contact with the circuit board 800.

The base 210-1 may be connected to the heat dissipation portion 805 of the circuit board 800. The frame 60-1 may be connected to the heat dissipation portion 805 of the circuit board 800. The frame 60-1 may be in contact with the heat dissipation portion 805 of the circuit board 800. The exposed region 126E of the frame 60-1 may be in contact with the heat dissipation portion 805 of the circuit board 800.

A heat transfer path in the embodiment shown in FIGs. 15 to 20D is as follows. Heat generated from the image sensor 810 may be transferred to the frame 60-1 of the base 210-1 through the heat dissipation portion 805 of the circuit board 800. Heat transferred from the heat dissipation portion 805 to the frame 60-1 may be transferred to the heat dissipation members 40 and 45, and may be dissipated to the outside of the cover member 300 through the heat dissipation members 40 and 45.

FIG. 21 is a cross-sectional view of a lens camera device 200-2 according to still another embodiment.

Referring to FIG. 21, the camera device 200-2 may include a lens moving apparatus 100-3, a lens module 400, a sensor base 1600, a heat dissipation member 1601 disposed on the sensor base 1600, a circuit board 800, and an image sensor 810. The camera device 200-2 may include an adhesive 1612 disposed between the sensor base 1600 and the circuit board 800 to couple the sensor base 1600 to a base 1210. The adhesive 1612 may be an epoxy or a thermally conductive epoxy.

The camera device 200-2 may include a filter 610 disposed on the sensor base 1600.

The lens moving apparatus 100-3 may include a cover member 1300, a housing 1140 disposed in the cover member 1300, a bobbin 1110 disposed in the housing 1140 so as to be movable in the optical-axis direction, a base 1210 disposed below the housing 140, a heat dissipation member 1211 disposed on the base 210, and a heat dissipation member 1401 disposed on the housing 140. The description of the material of the frame 60 may be applied directly or analogously to the heat dissipation members 1211 and 1401.

The lens moving apparatus 100-2 may further include a coil 1120 and a magnet 1130, which move the bobbin 1110 in the optical-axis direction. For example, the coil 1120 may be disposed on the bobbin 1110, and the magnet 1130 may be disposed on the housing 1140. In another embodiment, the coil may be disposed on the housing 1140, and the magnet may be disposed on the bobbin 1110.

The lens moving apparatus 100-2 may include an upper elastic member 1150 coupled to an upper portion or an upper surface of the bobbin 1110 and to an upper portion or an upper surface of the housing. The lens moving apparatus 100-2 may include a lower elastic member 1160 coupled to a lower portion or a lower surface of the bobbin 1110 and to a lower portion or a lower surface of the housing.

The heat dissipation member 1211 may be coupled to the base 210. At least a portion of the heat dissipation member 1211 may be embedded in or inserted into the base 210. In another embodiment, the heat dissipation member 1211 may be attached or coupled to the base 210 using an adhesive.

The heat dissipation member 1401 may be coupled to the housing 140. At least a portion of the heat dissipation member 1401 may be embedded in or inserted into the housing 1140. In another embodiment, the heat dissipation member 1401 may be attached or coupled to the housing 1140 using an adhesive.

The sensor base 1600 may be disposed between the lens moving apparatus 100-3 and the circuit board 800. The sensor base 1600 may be disposed on the circuit board 800. The sensor base 1600 may be disposed below the base 1210. The sensor base 1600 may be coupled to the circuit board 800. The sensor base 1600 may be coupled to the circuit board 800 using an adhesive or a thermally conductive adhesive.

The heat dissipation member 1601 may be connected to or in contact with the heat dissipation portion 801 of the circuit board 800. The heat dissipation member 1601 may be connected to or in contact with the heat dissipation member 1211. The heat dissipation member 1211 may be connected to or in contact with the heat dissipation member 1401. The heat dissipation member 1401 may be exposed outside the cover member 1300. For example, the heat dissipation member 1401 may pass through the cover member 1300 and may be exposed from the cover member 1300. The cover member 1300 may include an opening to expose the heat dissipation member 1401. The heat dissipation member 1401 may be connected to or in contact with the cover member 1300. In another embodiment, the heat dissipation member 1401 may not be exposed from the cover member 1300 and may be connected to or in contact with a side plate 301 of the cover member 1300.

Heat generated from the image sensor 810 may be transferred to the heat dissipation member 1601 of the sensor base 1600 through the heat dissipation portion 805 of the circuit board 800. Then, the heat may be dissipated to the outside of the cover member 300 through the heat dissipation member 1601 of the sensor base 1600, the heat dissipation member 1211 of the base 1210, and the heat dissipation member 1401 of the housing 1140.

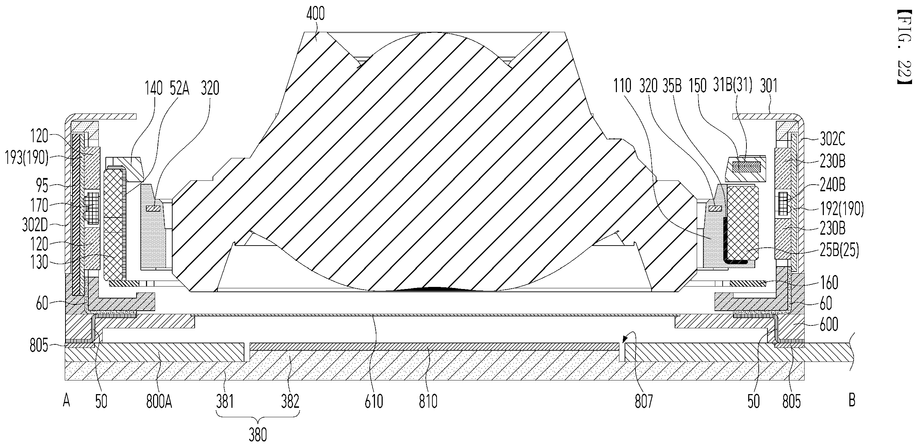

FIG. 22 is a cross-sectional view of a camera device according to still another embodiment.

The camera device shown in FIG. 22 may be a modified embodiment of the camera device 200 shown in FIG. 4A.

Referring to FIG. 22, the circuit board 800A may include an opening 807. For example, the opening 807 may be a through-hole or a hollow portion formed through the circuit board 800A (e.g., the first region 801). The opening 807 may expose the image sensor 810. The opening 807 may expose at least a portion of a heat dissipation member 380.

At least a portion of the image sensor 810 may be disposed in the opening 807 of the circuit board 800A. The camera device shown in FIG. 22 may include a heat dissipation member 380 disposed below the circuit board 800A. The image sensor 810 may be disposed on, attached to, or coupled to the heat dissipation member 380. The image sensor 810 may be disposed on, attached to, or coupled to at least a portion of the heat dissipation member 380 exposed by the opening 807.

The heat dissipation member 380 may include metal. The heat dissipation member 380 may be formed of metal having high thermal conductivity and high heat dissipation efficiency. For example, the heat dissipation member 380 may include at least one of SUS, aluminum, nickel, phosphorus, bronze, or copper.

The heat dissipation member 380 may include a body 381 disposed below the circuit board 800A and a protruding portion 382 (or a protruding region) protruding from the body 381 so as to be disposed in the opening 807 of the circuit board 800A.

The image sensor 810 may be disposed on, coupled to, or fixed to the protruding portion 382. For example, the image sensor 810 may be disposed on, coupled to, or attached to an upper surface of the protruding portion 382. For example, the upper surface of the protruding portion 382 may be positioned below an upper surface of the circuit board 800A. In another embodiment, the upper surface of the protruding portion 382 may be positioned at the same height as or at a higher position than the upper surface of the circuit board 800A.

The heat dissipation member 380 may stably support the circuit board 800A and may serve as a reinforcing member for suppressing damage to the circuit board 800A caused by external impact or contact. The heat dissipation member 380 may alternatively be referred to as a "reinforcing member."

The description of the circuit board 800A, the heat dissipation member 380, and the image sensor 810 shown in FIG. 22 may be applied directly or analogously to the embodiment 200-1 shown in FIG. 15.

In addition, the description of the circuit board 800A, the heat dissipation member 380, and the image sensor 810 shown in FIG. 22 may also be applied directly or analogously to the embodiment 200-2 shown in FIG. 21.

In addition, the camera device according to the embodiment may be included in an optical instrument for the purpose of forming an image of an object present in a space using reflection, refraction, absorption, interference, and diffraction, which are characteristics of light, for the purpose of increasing visibility, for the purpose of recording and reproduction of an image using a lens, or for the purpose of optical measurement or image propagation or transmission.

For example, the optical instrument according to the embodiment may be a cellular phone, a mobile phone, a smartphone, a portable terminal, a portable smart device, a digital camera, a laptop computer, a digital broadcasting terminal, a personal digital assistant (PDA), a portable multimedia player (PMP), a navigation device, etc., without being limited thereto, and may also be any of devices for capturing images or pictures.

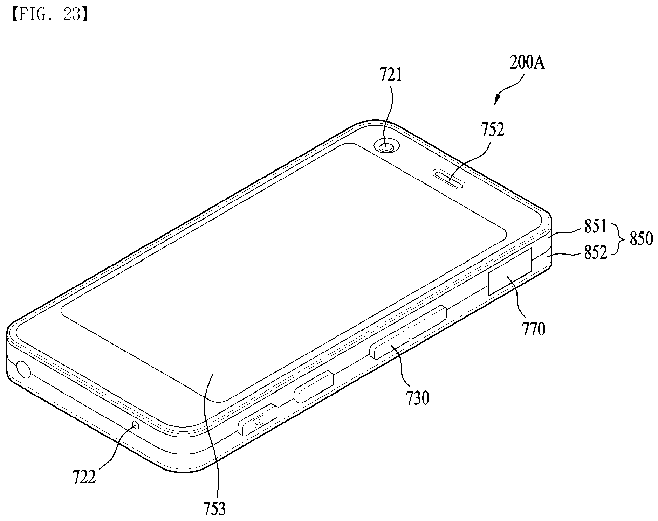

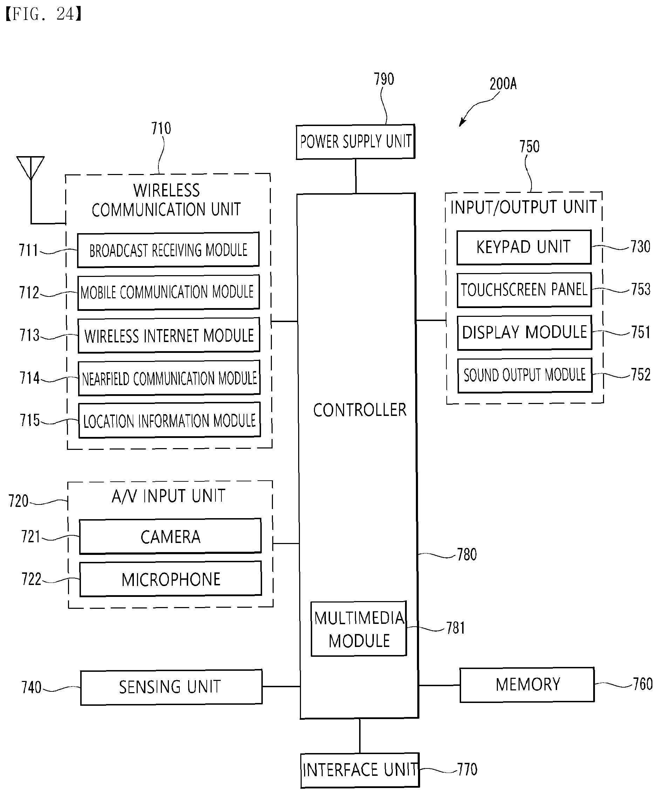

FIG. 23 is a perspective view of an optical instrument 200A according to an embodiment, and FIG. 24 is a configuration diagram of the optical instrument 200A shown in FIG. 23.

Referring to FIGs. 23 and 24, the optical instrument 200A may include a body 850, a wireless communication unit 710, an A/V input unit 720, a sensing unit 740, an input/output unit 750, a memory 760, an interface unit 770, a controller 780, and a power supply unit 790.

The body 850 shown in FIG. 23 may have a bar shape, without being limited thereto, and may be any of various types such as, for example, a slide type, a folder type, a swing type, or a swivel type, in which two or more subbodies are coupled so as to be movable relative to each other.

The body 850 may include a case (a casing, a housing, a cover, or the like) defining the external appearance thereof. In an example, the body 850 may be divided into a front case 851 and a rear case 852. A variety of electronic components of the terminal may be mounted in the space defined between the front case 851 and the rear case 852.

The wireless communication unit 710 may include one or more modules that enable wireless communication between the optical instrument 200A and a wireless communication system or between the optical instrument 200A and a network in which the optical instrument 200A is located. In an example, the wireless communication unit 710 may include a broadcast receiving module 711, a mobile communication module 712, a wireless Internet module 713, a nearfield communication module 714, and a location information module 715.

The audio/video (A/V) input unit 720 serves to input audio signals or video signals and may include a camera 721 and a microphone 722.

The camera 721 may include the camera device according to the embodiment.

The sensing unit 740 may sense the current state of the optical instrument 200A, such as the open or closed state of the optical instrument 200A, the position of the optical instrument 200A, the presence or absence of a user's touch, the orientation of the optical instrument 200A, or the acceleration/deceleration of the optical instrument 200A, and may generate a sensing signal to control the operation of the optical instrument 200A. For example, when the optical instrument 200A is a slide-type phone, whether the slide-type phone is open or closed may be detected. In addition, the sensing unit 740 serves to sense whether power is supplied from the power supply unit 790 or whether the interface unit 770 is coupled to an external device.

The input/output unit 750 serves to generate visual, audible, or tactile input or output. The input/output unit 750 may generate input data to control the operation of the optical instrument 200A and may display information processed in the optical instrument 200A.

The input/output unit 750 may include a keypad unit 730, a display module 751, a sound output module 752, and a touchscreen panel 753. The keypad unit 730 may generate input data in response to input to a keypad.

The display module 751 may include a plurality of pixels, the color of which varies in response to electrical signals. In an example, the display module 751 may include at least one of a liquid crystal display, a thin-film transistor liquid crystal display, an organic light-emitting diode, a flexible display, or a 3D display.

The sound output module 752 may output audio data received from the wireless communication unit 710 in a callsignal reception mode, a call mode, a recording mode, a voice recognition mode, or a broadcast reception mode, or may output audio data stored in the memory 760.

The touchscreen panel 753 may convert variation in capacitance, caused by a user's touch on a specific region of a touchscreen, into electrical input signals.

The memory 760 may store programs for the processing and control of the controller 780, and may temporarily store input/output data (e.g., a phone book, messages, audio, still images, pictures, and moving images). For example, the memory 760 may store images captured by the camera 721, for example, pictures or moving images.

The interface unit 770 serves as a passage for connection between the optical instrument 200A and an external device. The interface unit 770 may receive data or power from the external device and may transmit the same to respective components provided in the optical instrument 200A, or may transmit data inside the optical instrument 200A to the external device. For example, the interface unit 770 may include a wired/wireless headset port, an external charger port, a wired/wireless data port, a memory card port, a port for connection of a device having an identification module, an audio input/output (I/O) port, a video input/output (I/O) port, and an earphone port.

The controller 780 may control the overall operation of the optical instrument 200A. For example, the controller 780 may perform control and processing related to voice calls, data communication, and video calls.

The controller 780 may include a multimedia module 781 for multimedia playback. The multimedia module 781 may be provided in the controller 780 or may be provided separately from the controller 780.

The controller 780 may perform pattern recognition processing, by which writing or drawing input to the touchscreen is perceived as characters and images.

The power supply unit 790 may supply power required to operate the respective components upon receiving external power or internal power under the control of the controller 780.

The features, structures, and effects described above in the embodiments are included in at least one embodiment of the present disclosure, but are not necessarily limited to only one embodiment. Furthermore, the features, structures, and effects exemplified in the respective embodiments may be combined with other embodiments or modified by those skilled in the art. Therefore, content related to such combinations and modifications should be construed as falling within the scope of the present disclosure.

### [Industrial Applicability]

Embodiments may be applied to a lens moving apparatus, a camera device, and an optical instrument, capable of improving dissipation of heat generated from heat sources such as coils and an image sensor.

## Claims

1. A lens moving apparatus comprising:
a cover member;
a fixed unit comprising a base coupled to the cover member and a coil disposed on the base;
a moving unit comprising a magnet facing the coil, the moving unit being configured to be movable through interaction between the magnet and the coil;
a first heat dissipation member disposed on the base; and
a second heat dissipation member connected to the first heat dissipation member and exposed from the cover member.

2. The lens moving apparatus according to claim 1, wherein the fixed unit comprises a circuit board disposed on the base,
wherein the coil is disposed on the circuit board, and
wherein at least a portion of the circuit board is connected to the first heat dissipation member.

3. The lens moving apparatus according to claim 1, wherein the first heat dissipation member is exposed from a lower surface of the base.

4. The lens moving apparatus according to claim 1, wherein at least a portion of the first heat dissipation member is integrally formed with the base.

5. The lens moving apparatus according to claim 1, comprising a ball member disposed between the base and the moving unit.

6. The lens moving apparatus according to claim 1, wherein the cover member comprises an opening to expose the second heat dissipation member through the opening.

7. The lens moving apparatus according to claim 1, wherein the cover member comprises an upper plate and a side plate,
wherein the base comprises a side portion and a lower portion positioned below the side portion,
wherein the first heat dissipation member comprises a side plate disposed on the side portion of the base and a lower plate disposed on the lower portion of the base, and
wherein the second heat dissipation member is disposed on the side plate of the first heat dissipation member.

8. The lens moving apparatus according to claim 7, wherein a portion of the lower plate of the first heat dissipation member is exposed from a lower surface of the lower portion of the base.

9. The lens moving apparatus according to claim 1, wherein the second heat dissipation member comprises metal or graphite.

10. The lens moving apparatus according to claim 1, wherein the fixed unit comprises a circuit board disposed on the base,
wherein the coil is disposed on the circuit board, and
wherein at least a portion of the circuit board is connected to the first heat dissipation member.
